(19) Europäisches Patentamt / European Patent Office / Office européen des brevets

(11) **EP 4 651 093 A1**

(12) **EUROPEAN PATENT APPLICATION**
published in accordance with Art. 153(4) EPC

(43) Date of publication:
**19.11.2025 Bulletin 2025/47**

(21) Application number: **23915750.6**

(22) Date of filing: **06.12.2023**

(51) International Patent Classification (IPC):
*G06T 19/00* (2011.01)

(52) Cooperative Patent Classification (CPC):
**G06T 19/00**

(86) International application number:
**PCT/CN2023/136915**

(87) International publication number:
**WO 2024/148992 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 13.01.2023 CN 202310065723
13.01.2023 CN 202310084098
13.03.2023 CN 202310260970

(71) Applicant: **Beijing Zitiao Network Technology Co., Ltd.**
**Beijing 100190 (CN)**

(72) Inventor: **LI, Long**
**Beijing 100028 (CN)**

(74) Representative: **Grünecker Patent- und Rechtsanwälte**
**PartG mbB**
**Leopoldstraße 4**
**80802 München (DE)**

(54) **METHOD AND APPARATUS FOR GENERATING COVER IMAGE OF VIRTUAL OBJECT, DEVICE, MEDIUM, AND PROGRAM**

(57) Embodiments of the present application provide a method, an apparatus, a device, a medium, and a program for generating a cover image of a virtual object. The method includes receiving a generation instruction of a cover image of a virtual object; determining a position of a virtual camera for shooting the virtual object; shooting the virtual object according to the position of the virtual camera; and generating, according to an image of the virtual object shot by the virtual camera, a cover image corresponding to the virtual object. The cover image of the virtual object shot by this method is more complete and aesthetically pleasing.

```
┌─────────────────────────────────────┐
│ RECEIVE A GENERATION INSTRUCTION     │──── S1101
│ OF THE COVER IMAGE OF THE            │
│ VIRTUAL OBJECT                       │
└─────────────────────────────────────┘
              │
              ▼
┌─────────────────────────────────────┐
│ DETERMINE A POSITION OF A VIRTUAL    │──── S1102
│ CAMERA FOR SHOOTING THE VIRTUAL      │
│ OBJECT                               │
└─────────────────────────────────────┘
              │
              ▼
┌─────────────────────────────────────┐
│ SHOOT THE VIRTUAL OBJECT ACCORDING   │──── S1103
│ TO THE POSITION OF THE VIRTUAL       │
│ CAMERA                               │
└─────────────────────────────────────┘
              │
              ▼
┌─────────────────────────────────────┐
│ GENERATE THE COVER IMAGE             │──── S1104
│ CORRESPONDING TO THE VIRTUAL         │
│ OBJECT ACCORDING TO AN IMAGE OF THE  │
│ VIRTUAL OBJECT SHOT BY THE VIRTUAL   │
│ CAMERA                               │
└─────────────────────────────────────┘
```

**FIG. 1A**

EP 4 651 093 A1

## Description

The present application claims priority to Chinese Patent Application No. 202310065723.9, filed on January 13, 2023 and entitled "METHOD, APPARATUS, DEVICE, MEDIUM AND PROGRAM FOR GENERATING COVER IMAGE OF VIRTUAL OBJECT"; the present application further claims priority to Chinese Patent Application No. 202310084098.2, filed on January 13, 2023 and entitled "METHOD, APPARATUS, DEVICE, MEDIUM AND PROGRAM FOR RECONFIGURING COVER IMAGE OF VIRTUAL OBJECT"; and the present application further claims priority to Chinese Patent Application No. 202310260970.4, filed on March 13, 2023 and entitled "METHOD, APPARATUS, DEVICE, MEDIUM AND PROGRAM FOR RECONFIGURING COVER IMAGE OF VIRTUAL OBJECT", the entire contents of which are incorporated herein by reference.

## FIELD

Embodiments of the present application relate to the field of artificial intelligence and, in particular, to a method, an apparatus, a device, a medium, and a program for generating a cover image of a virtual object, a method, an apparatus, a device, a medium, and a program for reconfiguring a cover image of a virtual object, and a method, an apparatus, a device, a medium, and a program for reconfiguring a cover image of a virtual object.

## BACKGROUND

Extended reality (XR) refers to combining real and virtual through a computer to create a virtual environment that allows human-computer interaction. XR is also a generic term for various technologies such as virtual reality (VR), augmented reality (AR), and mixed reality (MR). By integrating the visual interaction technologies of the three, experiencers are given a "sense of immersion" of seamless transition between the virtual world and the real world.

In an XR game scene, in order to meet the personalized needs of users, a user generated content (UGC) function is added, that is, users can customize virtual scenes, materials, props, etc. in an editor provided by the game according to their own needs.

When a user-defined material, prop, etc. is published, a corresponding cover is generated. In the existing solutions, the generated cover image of the material, prop, etc. may not meet the needs of users.

The editor provided by the game can provide some polyhedrons, controls, materials, logic, materials, music, sound effects, etc. for users to select and use. When a user-defined material, prop, etc. is published, a corresponding cover is generated. In the existing solutions, the generated cover image of the material, prop, etc. may not meet the needs of users.

The user can also customize a virtual object by using elements such as materials in the provided editor according to his own needs. When a user-defined virtual object is published, a corresponding cover is generated. In the existing solutions, the cover of the virtual object may not meet the personalized needs of users.

## SUMMARY

Embodiments of the present application provide a method, an apparatus, a device, a medium, and a program for generating a cover image of a virtual object. The cover image of the virtual object shot by this method is more complete and aesthetically pleasing.

In a first aspect, an embodiment of the present application provides a method for generating a cover image of a virtual object, the method includes:

> receiving a generation instruction of the cover image of the virtual object;
> determining a position of a virtual camera for shooting the virtual object;
> shooting the virtual object according to the position of the virtual camera; and
> generating the cover image corresponding to the virtual object according to an image of the virtual object shot by the virtual camera.

In some embodiments, determining the position of the virtual camera includes:
determining a target distance between the virtual camera and a center point of the virtual object according to a size of the virtual object.

In some embodiments, determining the target distance between the virtual camera and the center point of the virtual object according to the size of the virtual object includes:
determining the target distance according to a size of a bounding box of the virtual object.

In some embodiments, determining the target distance according to the size of the bounding box of the virtual object includes:
determining the target distance according to a maximum size of the bounding box of the virtual object, where the bounding box of the virtual object has a plurality of sizes.

In some embodiments, determining the target distance according to the size of the bounding box of the virtual object includes:

> determining the target distance D by a formula:

$$D=k*(L+W+H);$$

> where L, W, and H are a length, a width, and a height of a cuboid bounding box of the virtual object, respectively.

In some embodiments, the virtual camera is located in a predetermined direction of the virtual object.

In some embodiments, the virtual camera is located in a direction perpendicular to a direction where the maximum size of the bounding box of the virtual object is located, and the bounding box of the virtual object has a plurality of sizes.

In some embodiments, a background of the image shot by the virtual camera is transparent.

In some embodiments, when the virtual object is shot, the virtual object is rendered, and other objects outside the virtual object are not rendered.

In some embodiments, before the virtual object is shot according to the position of the virtual camera, the method further includes:

adjusting a field of view of the virtual camera and/or a distance of a clipping plane of the virtual camera according to the target distance between the virtual camera and the center point of the virtual object, where the field of view of the virtual camera is negatively correlated with the target distance, and a nearest distance of the clipping plane of the virtual camera is positively correlated with the target distance.

In some embodiments, the virtual object is a user-defined virtual object, and the generation instruction is a saving instruction of the virtual object.

In some embodiments, the virtual object is a user-defined virtual object, the generation instruction is a publishing instruction of the virtual object, and the publishing instruction is configured to publish the virtual object to a specified platform.

In another aspect, an embodiment of the present application provides an apparatus for generating a cover image of a virtual object, the apparatus includes:

a receiving module, configured to receive a generation instruction of the cover image of the virtual object;

a determination module, configured to determine a position of a virtual camera for shooting the virtual object;

a shooting module, configured to shoot the virtual object according to the position of the virtual camera; and

a generation module, configured to generate the cover image corresponding to the virtual object according to an image of the virtual object shot by the virtual camera.

In another aspect, an embodiment of the present application provides an electronic device, the electronic device includes: a processor and a memory, where the memory is configured to store a computer program, and the processor is configured to invoke and run the computer program stored in the memory to perform the method according to any of the above.

In another aspect, an embodiment of the present application provides a computer-readable storage medium, the computer-readable storage medium is configured to store a computer program, and the computer program causes a computer to perform the method according to any of the above.

In another aspect, an embodiment of the present application provides a computer program product, including a computer program, and when the computer program is executed by a processor, the method according to any of the above is implemented.

Embodiments of the present application provide a method, an apparatus, a device, a medium, and a program for generating a cover image of a virtual object. The method includes receiving a generation instruction of a cover image of a virtual object; determining a position of a virtual camera for shooting the virtual object; shooting the virtual object according to the position of the virtual camera; and generating, according to an image of the virtual object shot by the virtual camera, a cover image corresponding to the virtual object. The cover image of the virtual object shot by this method is more complete and aesthetically pleasing.

The embodiments of the present application further provide a method, an apparatus, a device, a medium, and a program for reconfiguring a cover image of a virtual object. By adjusting a position, a size or a posture of the virtual object, a distance, a pose or a relative size between the virtual camera and the virtual object is changed, and an image shot by the virtual camera changes accordingly. By continuously adjusting a target parameter of the virtual object, the cover image of the virtual object that is shot satisfies the needs of users.

In a first aspect, an embodiment of the present application provides a method for reconfiguring a cover image of a virtual object, including:

deserializing a byte sequence corresponding to a cover image of a virtual object to form the virtual object in response to a reconfiguration instruction of the cover image of the virtual object;

configuring the virtual object and a virtual camera in a virtual shooting space for shooting the virtual object;

displaying, in a cover editing area, an image of the virtual object shot by the virtual camera;

adjusting a target parameter of the virtual object in the virtual shooting space in response to a first operation of a user, where the target parameter includes at least one of : a position, a size, or a posture; and

updating the image of the virtual object that is adjusted in the cover editing area to the cover image of the virtual object.

In some embodiments, adjusting the target parameter of the virtual object in the virtual shooting space in response to the first operation of the user includes:

in response to a moving operation in the cover editing area, adjusting a posture of the virtual object in the virtual shooting space according to a moving direction and/or a moving distance corresponding to the moving operation.

In some embodiments, adjusting the posture of the virtual object in the virtual shooting space according to the moving direction corresponding to the moving operation includes:

determining a rotation direction of the virtual object according to the moving direction corresponding to the moving operation; and
controlling the virtual object in the virtual shooting space to rotate in the rotation direction.

In some embodiments, determining the rotation direction of the virtual object according to the moving direction corresponding to the moving operation includes:
determining that the rotation direction of the virtual object is an X-axis, a negative X-axis, a Y-axis, and a negative Y-axis in sequence when the moving direction corresponding to the moving operation is up, down, left, or right.

In some embodiments, adjusting the posture of the virtual object in the virtual shooting space according to the moving distance corresponding to the moving operation includes:

determining a rotation angle of the virtual object according to the moving distance corresponding to the moving operation; and
controlling the virtual object in the virtual shooting space to rotate according to the rotation angle.

In some embodiments, the moving distance corresponding to the moving operation is a number of pixels moved, and determining the rotation angle of the virtual object according to the moving distance corresponding to the moving operation includes:
determining that the rotation angle of the virtual object is M*N when the number of pixels moved corresponding to the moving operation is M, where N is an integer greater than or equal to 1.

In some embodiments, a closer an operation position corresponding to the first operation is to the cover editing area, a smaller the size of the virtual object is and/or a farther the position of the virtual object is.

In some embodiments, adjusting the target parameter of the virtual object in the virtual shooting space in response to the first operation of the user includes:

controlling the image of the virtual object to be in an editing state in response to detecting a second operation on the image of the virtual object; and
adjusting a size of the virtual object in the virtual shooting space in response to an adjustment operation of the user on a size of the image of the virtual object in the editing state.

In some embodiments, adjusting the target parameter of the virtual object in the virtual shooting space in response to the first operation of the user includes:

controlling an image of the virtual object to be in a moveable state in response to detecting a third operation on the image of the virtual object; and
adjusting a position of the virtual object in the virtual shooting space in response to a drag operation of the user on the image of the virtual object.

In some embodiments, a background of the image shot by the virtual camera is transparent.

In some embodiments, when the virtual object is shot, the virtual object is rendered, and other objects outside the virtual object are not rendered.

In some embodiments, before the virtual object and the virtual camera are configured in the virtual shooting space, the method further includes:

determining a position of the virtual camera used in a current cover image reconfiguration; and
configuring the virtual object and the virtual camera in the virtual shooting space includes:
configuring the virtual object and the virtual camera in the virtual shooting space according to the position of the virtual camera used in the current cover image reconfiguration.

In some embodiments, determining the position of the virtual camera used in the current cover image reconfiguration includes:
if the cover image of the virtual object has been configured before, determining a position of the virtual camera when the cover image of the virtual object was latest reconfigured as the position of the virtual camera used in the current cover image reconfiguration.

In some embodiments, determining the position of the virtual camera used in the current cover image reconfiguration includes:
if the cover image of the virtual object has not been configured before, determining a default position of the virtual camera as the position of the virtual camera used in the current cover image reconfiguration.

In some embodiments, the default position of the virtual camera includes a target distance between the virtual camera and the center point of the virtual object, and the method further includes:
determining the target distance between the virtual camera and the center point of the virtual object according to a size of the virtual object.

In some embodiments, determining the target distance between the virtual camera and the center point of the virtual object according to the size of the virtual object includes:
determining the target distance according to a size of a bounding box of the virtual object.

In another aspect, an embodiment of the present application provides an apparatus for reconfiguring a cover image of a virtual object, the apparatus includes:

a deserialization module, configured to deserialize a byte sequence corresponding to a cover image of a virtual object to form the virtual object in response to a reconfiguration instruction of the cover image of the virtual object;
a configuring module, configured to configure the virtual object and a virtual camera in a virtual shooting space for shooting the virtual object;
a display module, configured to display an image of the virtual object shot by the virtual camera in a cover editing area;
an adjustment module, configured to adjust a target parameter of the virtual object in the virtual shooting space in response to a first operation of a user, where the target parameter includes at least one of : a position, a size, or a posture; and
an updating module, configured to update the image of the virtual object that is adjusted in the cover editing area to the cover image of the virtual object.

In another aspect, an embodiment of the present application provides an electronic device, the electronic device includes: a processor and a memory, where the memory is configured to store a computer program, and the processor is configured to invoke and run the computer program stored in the memory to perform the method according to any of the above.

In another aspect, an embodiment of the present application provides a computer-readable storage medium, the computer-readable storage medium is configured to store a computer program, and the computer program causes a computer to perform the method according to any of the above.

In another aspect, an embodiment of the present application provides a computer program product, including a computer program, and when the computer program is executed by a processor, the method according to any of the above is implemented.

The embodiments of the present application provide a method, an apparatus, a device, a medium, and a program for reconfiguring a cover image of a virtual object, including: deserializing a byte sequence corresponding to a cover image of a virtual object to form the virtual object in response to a reconfiguration instruction of the cover image of the virtual object; configuring the virtual object and a virtual camera in a virtual shooting space, and displaying, in a cover editing area, an image of the virtual object shot by the virtual camera; adjusting one or more target parameters of a position, a size or a posture of the virtual object in response to a first operation of a user; and updating the image of the virtual object that is adjusted in the cover editing area to the cover image of the virtual object. By adjusting the position, the size or the posture of the virtual object, a distance, a pose or a relative size between the virtual camera and the virtual object is changed, and an image shot by the virtual camera changes accordingly. By continuously adjusting a target parameter of the virtual object, a cover image of the virtual object that is shot satisfies the needs of users.

The embodiments of the present application further provide a method, an apparatus, a device, a medium, and a program for reconfiguring a cover image of a virtual object. By configuring a virtual camera for the virtual object and adjusting a position and/or a posture of the virtual camera, an image of the virtual object shot by the virtual camera changes accordingly, such that a cover image of the virtual object that is shot satisfies the needs of users.

In a first aspect, an embodiment of the present application provides a method for reconfiguring a cover image of a virtual object, the method includes:

configuring a virtual camera in response to a reconfiguration instruction of the cover image of the virtual object for shooting the virtual object;
displaying an image of the virtual object shot by the virtual camera in a cover editing area of a cover reconfiguration page;
adjusting a position and/or a posture of the virtual camera in response to an adjustment instruction of a user; and
updating the image of the virtual object that is adjusted in the cover editing area to the cover image of the virtual object.

In some embodiments, adjusting the position and/or the posture of the virtual camera in response to the adjustment instruction of the user includes:
adjusting the position and/or the posture of the virtual camera in response to a moving operation in the cover editing area.

In some embodiments, adjusting the position and/or the posture of the virtual camera in response to the moving operation in the cover editing area includes:
in response to a moving operation in the cover editing area, adjusting a posture of the virtual camera according to a moving direction and/or a moving distance corresponding to the moving operation.

In some embodiments, adjusting the posture of the virtual camera according to the moving direction and/or the moving distance corresponding to the moving operation includes:

determining a rotation direction of the virtual camera according to the moving direction corresponding to the moving operation; and
controlling the virtual camera to rotate in the rotation direction.

In some embodiments, determining the rotation direction of the virtual camera according to the moving direction corresponding to the moving operation includes:
determining that the rotation direction of the virtual camera is an X-axis, a negative X-axis, a Y-axis, and a negative Y-axis in sequence when the moving direction corresponding to the moving operation is up, down, left, or right.

In some embodiments, adjusting the posture of the virtual camera according to the moving direction and/or the moving distance corresponding to the moving operation includes:

> determining a rotation angle of the virtual camera according to the moving distance corresponding to the moving operation; and
> controlling the virtual camera to rotate according to the rotation angle.

In some embodiments, the moving distance corresponding to the moving operation is a number of pixels moved, and determining the rotation angle of the virtual camera according to the moving distance corresponding to the moving operation includes:
determining that the rotation angle of the virtual camera is M*N when the number of pixels moved corresponding to the moving operation is M, where N is an integer greater than or equal to 1.

In some embodiments, adjusting the position and/or the posture of the virtual camera in response to the adjustment instruction of the user includes:
adjusting the position and/or the posture of the virtual camera in response to a first operation of the user on a direction control.

In some embodiments, the direction control is a virtual direction control displayed on the cover reconfiguration page or a physical direction control on a controller of an extended reality device.

In some embodiments, adjusting the position and/or the posture of the virtual camera in response to the first operation of the user on the direction control includes:

> determining a target moving direction of the virtual camera according to a direction corresponding to the first operation in response to the first operation of the user on the direction control; and
> controlling the virtual camera to move in the target moving direction.

In some embodiments, determining the target moving direction of the virtual camera according to the direction corresponding to the first operation includes:
determining that the target moving direction of the virtual camera is a Z-axis, a negative Z-axis, an X-axis, and a negative X-axis in sequence when the direction corresponding to the first operation is forward, backward, left, or right.

In some embodiments, controlling the virtual camera to move in the target moving direction includes:

controlling the virtual camera to move in the target moving direction according to a predetermined moving speed or a predetermined moving distance.

In some embodiments, adjusting the position and/or the posture of the virtual camera in response to the adjustment instruction of the user includes:

> adjusting the posture of the virtual camera in response to a moving operation in the cover editing area; and
> adjusting the position of the virtual camera in response to a first operation of the user on a direction control on a controller.

In some embodiments, configuring the virtual camera in the virtual object in response to the reconfiguration instruction of the cover image of the virtual object includes:

> determining that the virtual object is not rendered in response to the reconfiguration instruction of the cover image of the virtual object, and acquiring a byte sequence corresponding to the virtual object; and
> deserializing the byte sequence corresponding to the virtual object to form the virtual object, and configuring the virtual camera for the virtual object.

In some embodiments, prompt information is displayed on the cover reconfiguration page, and the prompt information prompts to configure the cover image of the virtual object.

In some embodiments, the method further includes:
hiding the prompt information on the cover reconfiguration page in response to a cancel instruction.

In some embodiments, a reset control is further displayed on the cover reconfiguration page, and adjusting the position and/or the posture of the virtual camera in response to the adjustment instruction of the user includes:
adjusting the position of the virtual camera to an initial position in response to a second operation of the user on the reset control.

In some embodiments, before the virtual camera is configured, the method further includes:

> determining a position and a posture of the virtual camera used in a current cover image reconfiguration; and
> where configuring the virtual camera includes:
> configuring the virtual camera according to the position and the posture of the virtual camera used in the current cover image reconfiguration.

In some embodiments, determining the position and the posture of the virtual camera used in the current cover image reconfiguration includes:

determining a position and a posture of the virtual camera when the cover image of the virtual object was latest reconfigured as the position and the posture of the virtual camera used in the current cover image reconfiguration, if the cover image of the virtual object has been configured before.

In some embodiments, determining the position of the virtual camera used in the current cover image reconfiguration includes:

determining an initial position and an initial posture of the virtual camera as the position and the posture of the virtual camera used in the current cover image reconfiguration, if the cover image of the virtual object has not been configured before.

In some embodiments, the method further includes:

configuring the virtual camera according to an initial position and an initial posture of the virtual camera when the cover image of the virtual object is shot for the first time;

shooting the virtual object according to the initial position and the initial posture of the virtual camera; and

generating the cover image corresponding to the virtual object according to the image of the virtual object shot by the virtual camera.

In some embodiments, a background of the image shot by the virtual camera is transparent.

In some embodiments, when the virtual object is shot, a part of virtual elements need to be shot in the virtual object is rendered, and other virtual elements are not rendered.

In some embodiments, the virtual object is a virtual scene, and configuring the virtual camera in response to the reconfiguration instruction of the cover image of the virtual object includes:

configuring the virtual camera in the virtual scene in response to the reconfiguration instruction of the cover image of the virtual object.

In another aspect, an embodiment of the present application provides an apparatus for reconfiguring a cover image of a virtual object, the apparatus includes:

a configuring module, configured to set a virtual camera in response to a reconfiguration instruction of the cover image of the virtual object for shooting the virtual object;

a display module, configured to display an image of the virtual object shot by the virtual camera in a cover editing area of a cover reconfiguration page;

an adjustment module, configured to adjust a position and/or a posture of the virtual camera in response to an adjustment instruction of a user; and

an updating module, configured to update the image of the virtual object that is adjusted in the cover editing area to the cover image of the virtual object.

In another aspect, an embodiment of the present application provides an XR device, the XR device includes: a processor and a memory, where the memory is configured to store a computer program, and the processor is configured to invoke and run the computer program stored in the memory to perform the method according to any of the above.

In another aspect, an embodiment of the present application provides a computer-readable storage medium, the computer-readable storage medium is configured to store a computer program, and the computer program causes a computer to perform the method according to any of the above.

In another aspect, an embodiment of the present application provides a computer program product, including a computer program, and when the computer program is executed by a processor, the method according to any of the above is implemented.

The embodiments of the present application provide a method, an apparatus, a device, a medium, and a program for reconfiguring a cover image of a virtual object. In response to a reconfiguration instruction of a cover image of a virtual object, the virtual camera for shooting the virtual object is set. The image of the virtual object shot by the virtual camera is displayed in a cover editing area of a cover reconfiguration page. The position and/or the posture of the virtual camera is adjusted in response to an adjustment instruction of a user. and the image of the virtual object that is adjusted in the cover editing area is updated to the cover image of the virtual object. By adjusting the position and/or the posture of the virtual camera, the image of the virtual object shot by the virtual camera changes accordingly, such that the cover image of the virtual object that is shot satisfies the needs of users.

**BRIEF DESCRIPTION OF THE DRAWINGS**

In order to illustrate the technical solutions in the embodiments of the present invention more clearly, the following will briefly introduce the drawings required in the description of the embodiments. Obviously, the drawings in the following description are only some embodiments of the present invention, and for those of ordinary skill in the art, other drawings can be obtained according to these drawings without paying creative labor.

FIG. 1A is a flowchart of a method for generating a cover image of a virtual object provided in embodiment 1 of the present application;

FIG. 1B is a schematic diagram of a positional relationship between a virtual camera and a virtual object;

FIG. 1C is a schematic diagram of a parameter of the virtual camera;

FIG. 1D is a schematic structural diagram of an apparatus for generating a cover image of a virtual object provided in embodiment 2 of the present application;

FIG. 2A is a flowchart of a method for reconfiguring a cover image of a virtual object provided in embodiment 1 of the present application;

FIG. 2B is a schematic diagram of a reconfiguration entry of the cover image of the virtual object;

FIG. 2C is a schematic diagram of a further reconfiguration entry of the cover image of the virtual object;

FIG. 2D is a schematic diagram of a further reconfiguration entry of the cover image of the virtual object;

FIG. 2E is a schematic diagram of a comparison before and after the cover image of the virtual object is reconfigured;

FIG. 2F is a flowchart of a method for reconfiguring a cover image of a virtual object provided in embodiment 2 of the present application;

FIG. 2G is a schematic diagram of a positional relationship between a virtual camera and a virtual object;

FIG. 2H is a schematic diagram of a parameter of the virtual camera;

FIG. 2I is a schematic structural diagram of an apparatus for reconfiguring a cover image of a virtual object provided in embodiment 3 of the present application;

FIG. 3A is a flowchart of a method for reconfiguring a cover image of a virtual object provided in embodiment 1 of the present application;

FIG. 3B is a schematic diagram of a publication page of a virtual scene;

FIG. 3C is a flowchart of a method for reconfiguring a cover image of a virtual object provided in embodiment 2 of the present application;

FIG. 3D is a flowchart of a method for reconfiguring a cover image of a virtual object provided in embodiment 3 of the present application;

FIG. 3E is a schematic diagram of a further publication page of the virtual scene;

FIG. 3F is a schematic structural diagram of an apparatus for reconfiguring a cover image of a virtual object provided in embodiment 4 of the present application;

FIG. 4 is a schematic structural diagram of an electronic device provided in multiple embodiments of the present application.

## DETAILED DESCRIPTION OF EMBODIMENTS

The technical solutions in the embodiments of the present invention will be clearly and completely described below with reference to the drawings in the embodiments of the present invention. Obviously, the described embodiments are only a part of embodiments of the present invention, rather than all embodiments. Based on the embodiments in the present invention, all other embodiments obtained by those of ordinary skill in the art without creative labor belong to the protection scope of the present invention.

It should be noted that the terms "first" and "second" in the description, claims and drawings of the present invention are used to distinguish similar objects, but not necessarily to describe a specific order or sequence. It should be understood that the data used in this way can be exchanged under appropriate circumstances, such that the embodiments of the present invention described herein can be implemented in a sequence other than those illustrated or described herein. In addition, the terms "include" and "have" and any variations thereof are intended to cover non-exclusive inclusion. For example, a process, method, system, product or server including a series of steps or units is not necessarily limited to those steps or units clearly listed, but may include other steps or units not clearly listed or inherent to these processes, methods, products or devices.

In order to facilitate understanding of the embodiments of the present application, before describing the embodiments of the present application, some concepts involved in all the embodiments of the present application will be appropriately explained as follows:

XR is a generic term for VR, AR and AR technologies. XR devices include but are not limited to VR devices, AR devices and MR devices, and XR devices follow the openXR standard.

VR: a technology for creating and experiencing a virtual world, which calculates and generates a virtual environment, is a multi-source information (the virtual reality mentioned herein includes at least visual perception, and may also include auditory perception, tactile perception, motion perception, and even taste perception, olfactory perception, etc.), and implements a fusion, interactive three-dimensional dynamic view and entity behavior simulation of the virtual environment, such that a user is immersed in the simulated virtual reality environment, and applications of various virtual environments such as maps, games, videos, education, medical care, simulation, collaborative training, sales, assisted manufacturing, maintenance and repair are realized.

A VR device refers to a terminal that implements virtual reality effects, and can usually be provided in the form of glasses, a head mounted display (HMD), and contact lenses, so as to implement visual perception and other forms of perception. Certainly, the form of the virtual reality device is not limited thereto, and may be further miniaturized or enlarged according to actual needs.

AR: An AR setting refers to a simulated setting in which at least one virtual object is superimposed on a physical setting or a representation thereof. For example, an electronic system may have an opaque display and at least one imaging sensor. The imaging sensor is configured to capture images or videos of the physical setting, and the images or videos are representations of the physical setting. The system combines the images or videos with the virtual object and displays the combination on the opaque display. An individual uses the system to indirectly view the physical setting via the images or videos of the physical setting, and observes the virtual object superimposed on the physical setting. When the system uses one or more image sensors to capture images of the physical setting, and uses those images to present the AR setting on the opaque display, the displayed images are called video pass-through. Alternatively, the electronic system for displaying the AR setting may have a transparent or semi-transparent display through which the individual can directly view the physical setting. The system can display the virtual object on the transparent or semi-transparent display, such that the individual uses the system to observe the virtual object superimposed on the physical setting. For another example, the system may include a projection system that projects the virtual object into the physical setting. The virtual object may be projected, for example, on a physical surface or as a hologram, such that the individual uses the system to observe the virtual object superimposed on the physical setting. Specifically, a technology for calculating camera pose parameters of a camera in a real world (or a three-dimensional world, a real world) in real time during a process of capturing images by the camera, and adding virtual elements to the images captured by the camera according to the camera pose parameters. The virtual elements include but are not limited to, images, video, and three-dimensional models. A goal of the AR technology is to sleeve the virtual world on the real world on a screen for interaction.

MR: Presents virtual scene information in a real scene to establish an interactive feedback information loop among a real world, a virtual world and a user, so as to enhance a sense of reality of user experience. For example, integrating a computer-created sensory input (for example, a virtual object) with a sensory input from a physical setting or a representation thereof in a simulated setting. In some MR settings, the computer-created sensory input may adapt to changes in the sensory input from the physical setting. In addition, some electronic systems for presenting the MR setting may monitor an orientation and/or a position relative to the physical setting, such that the virtual object may interact with a real object (that is, a physical element from the physical setting or a representation thereof). For example, the system may monitor motion, such that a virtual plant appears to be stationary relative to a physical building.

Virtual reality device (VR device), a terminal that implements virtual reality effects, can usually be provided in the form of glasses, a head-mounted display (HMD for short), and contact lenses, so as to implement visual perception and other forms of perception. Certainly, the form of the virtual reality device is not limited thereto, and can be further miniaturized or enlarged according to actual needs.

Optionally, the virtual reality device (that is, the XR device) described in the embodiments of the present application may include, but are not limited to, the following types:

1) Mobile virtual reality device, which supports setting a mobile terminal (such as a smart phone) in various ways (such as a head-mounted display provided with a special card slot), and the mobile terminal performs calculations related to virtual reality functions through a wired or wireless connection with the mobile terminal, and outputs data to the mobile virtual reality device, such as watching virtual reality videos through an APP of the mobile terminal.

2) Integrated virtual reality device, which has a processor for performing calculations related to virtual functions, and thus has independent virtual reality input and output functions, does not need to be connected to a PC or a mobile terminal, and has a high degree of freedom in use.

3) PC virtual reality (PCVR) device, which uses a PC terminal to perform calculations related to virtual reality functions and data output, and an external PC virtual reality device uses the data output by the PC terminal to implement virtual reality effects.

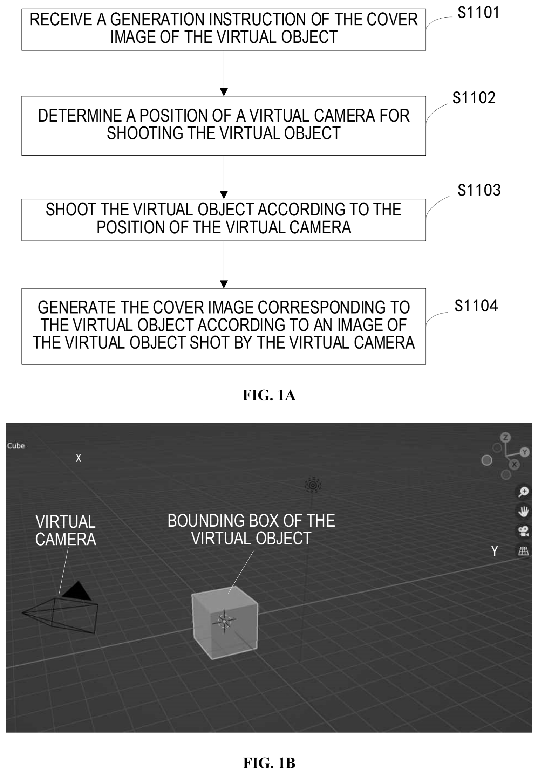

FIG. 1A is a flowchart of a method for generating a cover image of a virtual object provided in embodiment 1 of the present application, and the method is applied to an XR device. As shown in FIG. 1A, the method provided in this embodiment includes the following steps.

At block S1101, a generation instruction of the cover image of the virtual object is received.

The virtual object may be an object such as a prop or a material in a virtual scene, and both the material and the prop are virtual objects formed by building and assembling at least one geometric body according to a certain relative position and posture. Optionally, the material and the prop further include elements such as controls, materials, logic, sound effects, and special effects.

The material is usually configured to form a virtual scene, for example, plants, animals, houses, etc. in a virtual scene are materials, and the material is usually a static virtual object.

A prop may exist independently of the virtual scene, and is usually used for interaction between virtual characters (avatars, also known as game characters) in the virtual scene or to perform tasks. The prop is usually a movable virtual object. The virtual character may collect the prop into a backpack of the user, and subsequently the virtual character may hold the prop to play or perform tasks, and may also give the prop to other users.

In a game scene, the prop may be an attack equipment, a helmet, an armor, a letter, an intelligence book, etc. The backpack refers to a space (also referred to as an inventory) on the virtual character. In a game scene, a certain number of inventories are provided on the game character, such that the virtual character may place game equipment and game props, and at the same time, the backpack will also display the amount of virtual currency held by the virtual character, etc.

In this embodiment, the virtual object may be a prop and a material provided by the virtual scene itself, for example, the material in a material library, or may be the user-defined prop and material. In the XR device, in order to meet the personalized needs of users, a UGC function is added, that is, users may customize a material or a prop in an editor provided by the game according to their own needs.

The editor may provide some editing elements such as polyhedrons, controls, materials, physics, logic, music, sound effects, and special effects for users to use. A user may customize a material or a prop in the editor, and the user-defined prop may be called a UGC prop, and the user-defined material is called a UGC material.

The user may also use the editor to customize a virtual scene. The virtual scene in the XR device is an extended reality scene, and the extended reality scene is a 3D virtual scene. The user-defined virtual scene is also called the user's own world, and other users may enter the user-defined scene to play. The user-defined virtual scene may be called a UGC world or a UGC scene.

The customization in the embodiments of the present application may be understood as an object or a scene that the user independently builds and forms by using editing elements provided by the editor in the editor.

The customized material may be published to the material library for other users to view, download and use, and the customized prop may be published to the user's backpack or a fixed platform for the user's own use or for other users to view, claim and use.

Before the material and the prop are published, the cover images of the prop and the material need to be shot. The cover image may intuitively represent the appearance of the prop or the material, which is convenient for other users to understand the material and the prop through the cover images of the material and the prop. Therefore, it is very necessary to shoot a good cover image.

In this embodiment, after the virtual object is created, the user triggers the generation instruction of the cover image. For example, before the user creates the virtual object and saves it, a generation control of the cover image is displayed in the editing space of the editor. Alternatively, after the user saves the virtual object and before the virtual object is published, a generation control of the cover image is displayed on the publication interface. The user clicks, double-clicks, or long-presses the generation control of the cover image to generate the generation instruction of the cover image.

Optionally, the generation instruction is a saving instruction of the virtual object, that is, after the user performs a first operation on the saving control of the virtual object, the saving instruction of the virtual object is triggered, and the XR device first generates a cover image of the virtual object according to the saving instruction, and then saves the virtual object and the cover image of the virtual object. The first operation may be a click, double-click, long press, or hover operation on the saving control, etc.

Optionally, the generation instruction is a publishing instruction of the virtual object, and the publishing instruction is configured to publish the virtual object to a specified platform. After the user performs a second operation on the publishing control of the virtual object, the publishing instruction is triggered, and the XR device first generates a cover image of the virtual object according to the publishing instruction, and then publishes the virtual object and the cover image of the virtual object. The second operation may be a click, double-click, long press, or hover operation on the publishing control, etc.

In the XR device, the generation instruction may be an instruction input by the user through a controller of the XR device, or may be an instruction input by gestures, voice, etc., which is not explicitly limited in the embodiments of the present application.

When the virtual object is published or saved, a cover image of the virtual object is automatically generated, which brings a better experience for users.

At block S1102, a position of a virtual camera for shooting the virtual object is determined.

The position of the virtual camera may be determined according to a target distance between the virtual camera and the virtual object, and/or an orientation of the virtual camera.

In an implementation, the position of the virtual camera is a predetermined position, that is, the target distance between the virtual camera and the virtual object is a predetermined distance, and the virtual camera is located in a predetermined direction of the virtual object, or the virtual camera is located in a direction perpendicular to a direction where a maximum size of a bounding box of the virtual object is located, and the bounding box of the virtual object has a plurality of sizes.

In another implementation, a target distance between the virtual camera and a center point of the virtual object is determined according to a size of the virtual object, and the virtual camera is located in a predetermined direction of the virtual object, that is, an orientation of the virtual camera is a predetermined fixed direction, or the virtual camera is located in a direction perpendicular to a direction where a maximum size of a bounding box of the virtual object is located, and the bounding box of the virtual object has a plurality of sizes.

Optionally, the target distance between the virtual camera and the center point of the virtual object may be determined according to the size of the virtual object by: determining the target distance according to a size of a bounding box of the virtual object.

In this embodiment, a bounding box is set for the virtual object, and the bounding box, also known as a bounding volume, may be regarded as a transparent object that covers or surrounds all or part of the virtual object. The bounding box is configured to assist in detecting the distance between the virtual object and other objects, and the bounding box may be invisible to the user.

The shape of the bounding box of the virtual object is not limited in this embodiment, and the shape of the bounding box may be a cylinder, a cube, a cuboid, an ellipsoid, a sphere, etc., and may also be some irregular three-dimensional shapes.

As an example, there are two ways to determine the target distance between the virtual camera and the center point of the virtual object according to the size of the bounding box of the virtual object.

In a first way, the target distance is determined according to a maximum size of the bounding box of the virtual object, and the bounding box of the virtual object has a plurality of sizes.

When the bounding box of the virtual object is a cuboid bounding box, the cuboid bounding box includes three sizes: a size of the length, a size of the width, and a size of the height, and the maximum size of the bounding box of the virtual object is a maximum value among the length, the width, and the height of the cuboid bounding box. For example, the virtual object is a long rod, and the length, width, and height of the bounding box of the virtual object are 100 cm, 10 cm, and 10 cm, respectively. Then, when calculating the target distance, the target distance is determined according to the length of the bounding box of the virtual object, that is, 100cm.

When the bounding box of the virtual object is a cylinder, the size of the bounding box includes a size of the diameter and a height of the cylinder, and the maximum size of the bounding box of the virtual object is a maximum value among the diameter and the height of the cylinder bounding box.

As an example, the target distance D between the virtual camera and the center point of the virtual object is D=k*L, where L is the maximum size of the bounding box of the virtual object, k is an adjustment factor, a value of k is predetermined, and a value of k is a number greater than 0. As an example, the value of k is 0.8, 1.5, or 2, etc.

In a second way, the target distance D between the virtual camera and the center point of the virtual object is determined by the following formula:

D=k*(L+W+H); where L, W, and H are the length, width, and height of the cuboid bounding box of the virtual object, respectively, k is an adjustment factor, the value of k is predetermined, and the value of k is a number greater than 0. As an example, the value of k is 0.5, 0.8, or 1.2, etc.

In the second way, the bounding box is a cuboid bounding box. When the bounding box of the virtual object is a cylinder, the size of the bounding box includes a diameter and a height of the cylinder. In this case, the above formula may be transformed to obtain D=k*(R+H), where R is the diameter of the cylinder and H is the height of the cylinder.

When the bounding box of the virtual object is a sphere, the target distance is determined according to a diameter or a radius of the sphere, for example, the target distance D=k*R, where R is the diameter of the sphere.

After the target distance between the virtual camera and the virtual object is determined, the orientation of the virtual camera needs to be determined. In an implementation, the virtual camera is located in a predetermined direction of the virtual object, for example, the virtual camera is located on an X-axis, a Y-axis, or a Z-axis of a coordinate system corresponding to the virtual object.

The coordinate system corresponding to the virtual object refers to a coordinate system established with an origin at a center point of the virtual object or a center point of the bounding box of the virtual object.

Certainly, the orientation of the virtual camera is not limited to the X-axis, the Y-axis, or the Z-axis of the coordinate system corresponding to the virtual object, and the orientation of the virtual camera may also be at a predetermined angle with the X-axis, the Y-axis, or the Z-axis, for example, the virtual camera is located on an XY plane and at a predetermined angle with the X-axis.

In another implementation, the virtual camera is located in a direction perpendicular to a direction where the maximum size of the bounding box of the virtual object is located, and the perpendicular direction is a direction in the coordinate system corresponding to the virtual object. In the coordinate system corresponding to the virtual object, the direction where the maximum size of the bounding box of the virtual object is located is determined first, and then the perpendicular direction of the direction where the maximum size is located is determined. For example, if the direction where the maximum size of the bounding box of the virtual object is located is the X-axis direction, the orientation of the virtual camera is located in a direction perpendicular to the X-axis. By configuring the virtual camera in the direction perpendicular to the direction where the maximum size of the bounding box of the virtual object is located, the virtual camera may shoot an appearance of the virtual object in the direction where the maximum size is located, such that the shot virtual object may be more complete and may more truly reflect the appearance and characteristics of the virtual object.

At block S1103, the virtual object is shot according to the position of the virtual camera.

After the position of the virtual camera is determined, according to the position of the virtual camera, the virtual camera and the virtual object are set in the virtual shooting space, and a lens of the virtual camera faces the virtual object. After the configuration is completed, the virtual camera automatically shoots the virtual object to obtain an image of the virtual object. The virtual object is a 3D three-dimensional model, and the image shot by the virtual camera is a 2D plane image.

FIG. 1B is a schematic diagram of a positional relationship between a virtual camera and a virtual object. As shown in FIG. 1B, the bounding box of the virtual object is a cube, and a coordinate system is established with an origin at the center point of the bounding box of the virtual object, as shown in the figure. The virtual camera is located in a plane formed by the X-axis and the -Y-axis, and forms a predetermined angle with the X-axis.

In this embodiment, when the virtual object is shot, only the virtual object is rendered for the virtual camera, and other objects outside the virtual object are not rendered. The virtual camera may only shoot rendered objects, and not shoot non-rendered objects, such that the content shot by the virtual camera only includes the rendered object and does not include other objects, that is, other virtual objects in the background that the user may see but are not selected as the cover image to be shot are eliminated, such that the shot content is more aesthetically pleasing and meets the expectations of the user.

The virtual camera has a similar function as a physical camera in a real environment, and the virtual camera also has parameters. As an example, the parameters of the virtual camera include a field of view (FOV) of the virtual camera and a distance of a clipping plane of the virtual camera.

As an example, the field of view of the virtual camera is 90 degrees. When the field of view of the virtual camera is 90 degrees and the target distance D between the virtual camera and the center point of the virtual object is D=0.5*(L+W+H), any orientation of the virtual object may be covered by the virtual camera in a large area, such that the shot cover image is complete and aesthetically pleasing. L, W, and H are the length, width, and height of the cuboid bounding box of the virtual object.

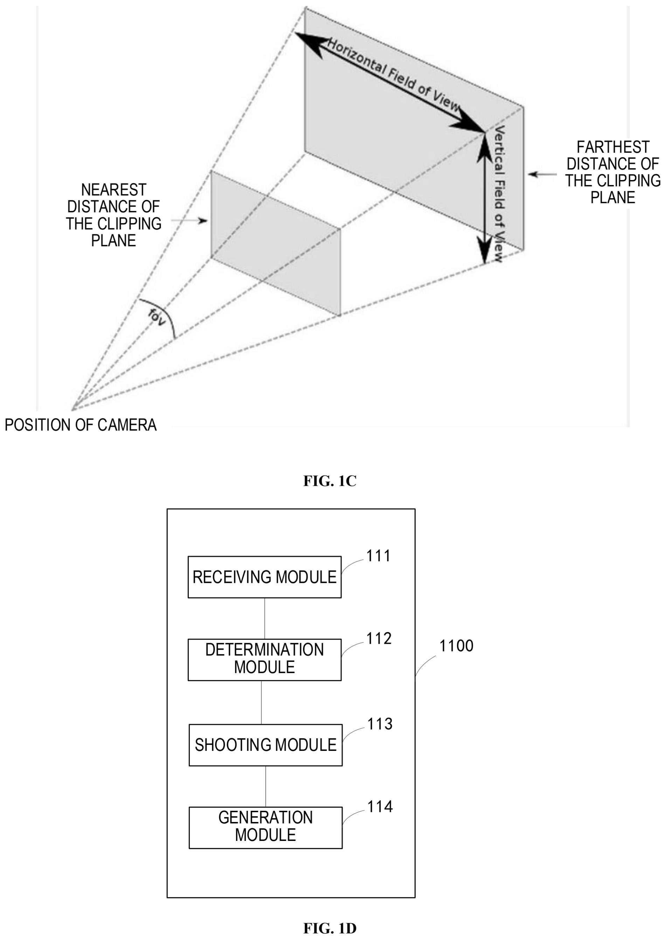

The distance of the clipping plane of the virtual camera includes a nearest distance and a farthest distance. The nearest distance of the clipping plane refers to a nearest drawing point of the virtual camera, and the farthest distance of the clipping plane refers to the farthest drawing point of the virtual camera. The nearest drawing point and the farthest drawing point may be understood as distances from a position where rendering of the virtual object starts and a position where rendering of the virtual object stops to the virtual camera. Referring to FIG. 1C, FIG. 1C is a schematic diagram of a parameter of the virtual camera.

The configuration of the nearest distance and the farthest distance of the clipping plane of the virtual camera may satisfy display problems of some extreme geometric bodies, and avoid the cover image from being cut due to a small drawing interval of the virtual camera. For example, when shooting a cuboid with a length and a width of 1 m and a height of 1000 m, it may be drawn normally when the "length/width" plane is directly facing or slightly inclined to the virtual camera, and the three-dimensional object at a close or far distance will not be cut off due to insufficient drawing range. The cutting display here means that a complete virtual object may not be displayed, and only a part of the virtual object may be displayed, and the part that may not be displayed is equivalent to being cut off.

Optionally, the field of view of the virtual camera and/or the distance of the clipping plane of the virtual camera may be adjusted according to the target distance between the virtual camera and the center point of the virtual object.

The field of view of the virtual camera is negatively correlated with the target distance, that is, the larger the target distance, the smaller the field of view of the virtual camera may be adjusted.

The nearest distance of the clipping plane of the virtual camera is positively correlated with the target distance, that is, the larger the target distance, the larger the nearest distance of the clipping plane of the virtual camera.

The parameters of the virtual camera may be adjusted according to the actual effect of the application. By adjusting the parameters of the virtual camera, the shot cover image is more aesthetically pleasing, avoiding a lot of blank areas on edges of the cover image, and making the pattern display and filling in the cover image plumper.

At block S1104, the cover image corresponding to the virtual object is generated according to the image of the virtual object shot by the virtual camera.

Optionally, a background of the image shot by the virtual camera is transparent, and correspondingly, a background of the cover image corresponding to the virtual object is also transparent.

In addition, in this embodiment, when the virtual object is shot, only the virtual object is rendered, and other objects outside the virtual object are not rendered, such that the shot cover image includes only the virtual object and does not include other objects, thereby making the shot cover image more complete and aesthetically pleasing.

In this embodiment, the generation instruction of the cover image of the virtual object is received, the position of the virtual camera for shooting the virtual object is determined; the virtual object is shot according to the position of the virtual camera; and the cover image corresponding to the virtual object is generated according to the image of the virtual object shot by the virtual camera. The cover image shot by this method is more complete and aesthetically pleasing.

In order to better implement the method for generating a cover image of a virtual object in the embodiments of the present application, the embodiments of the present application further provide an apparatus for generating a cover image of a virtual object. FIG. 1D is a schematic structural diagram of an apparatus for generating a cover image of a virtual object provided in embodiment 2 of the present application. As shown in FIG. 1D, the apparatus 1100 for generating a cover image of a virtual object may include:

a receiving module 111, configured to receive a generation instruction of the cover image of the virtual object;

a determination module 112, configured to determine a position of a virtual camera for shooting the virtual object;

a shooting module 113, configured to shoot the virtual object according to the position of the virtual camera; and

a generation module 114, configured to generate the cover image corresponding to the virtual object according to an image of the virtual object shot by the virtual camera.

In some embodiments, the determination module 112 is further configured to:
determine a target distance between the virtual camera and a center point of the virtual object according to a size of the virtual object.

In some embodiments, the determination module 112 is further configured to:
determine the target distance according to a size of a bounding box of the virtual object.

In some embodiments, the determination module 112 is further configured to:
determine the target distance according to a maximum size of the bounding box of the virtual object, where the bounding box of the virtual object has a plurality of sizes.

In some embodiments, the determination module 112 is further configured to:

determine the target distance D by the following formula:

$$D = k*(L+W+H);$$

where L, W, and H are the length, width, and height of the cuboid bounding box of the virtual object, respectively.

In some embodiments, the virtual camera is located in a predetermined direction of the virtual object.

In some embodiments, the virtual camera is located in a direction perpendicular to a direction where a maximum size of the bounding box of the virtual object is located, and the bounding box of the virtual object has a plurality of sizes.

In some embodiments, a background of the image shot by the virtual camera is transparent.

In some embodiments, when the virtual object is shot, the virtual object is rendered, and other objects outside the virtual object are not rendered.

In some embodiments, the apparatus further includes an adjustment module, configured to:
adjust a field of view of the virtual camera and/or a distance of a clipping plane of the virtual camera according to the target distance between the virtual camera and the center point of the virtual object, where the field of view of the virtual camera is negatively correlated with the target distance, and a nearest distance of the clipping plane of the virtual camera is positively correlated with the target distance.

In some embodiments, the virtual object is a user-defined virtual object, and the generation instruction is a saving instruction of the virtual object.

In some embodiments, the virtual object is a user-defined virtual object, the generation instruction is a publishing instruction of the virtual object, and the publishing instruction is configured to publish the virtual object to a specified platform.

It should be understood that the apparatus embodiments and the method embodiments may correspond to each other, and reference may be made to the method embodiments for similar descriptions. To avoid repetition, details are not described here again.

The apparatus 1100 of the embodiments of the present application is described above from the perspective of functional modules in conjunction with the drawings. It should be understood that the functional modules may be implemented in a hardware form, may also be implemented by instructions in a software form, and may also be implemented by a combination of hardware and software modules. Specifically, each step of the method embodiments in the embodiments of the present application may be completed by an integrated logic circuit of hardware in a processor and/or instructions in a software form, and the steps of the method disclosed in the embodiments of the present application may be directly embodied as being executed and completed by a hardware decoder processor, or executed and completed by a combination of hardware and software modules in a decoder processor. Optionally, the software module may be located in a mature storage medium in the art such as a random access memory, a flash memory, a read-only memory, a programmable read-only memory, an electrically erasable programmable memory, and a register. The storage medium is located in the memory, and the processor reads information in the memory and completes the steps in the above method embodiments in combination with its hardware.

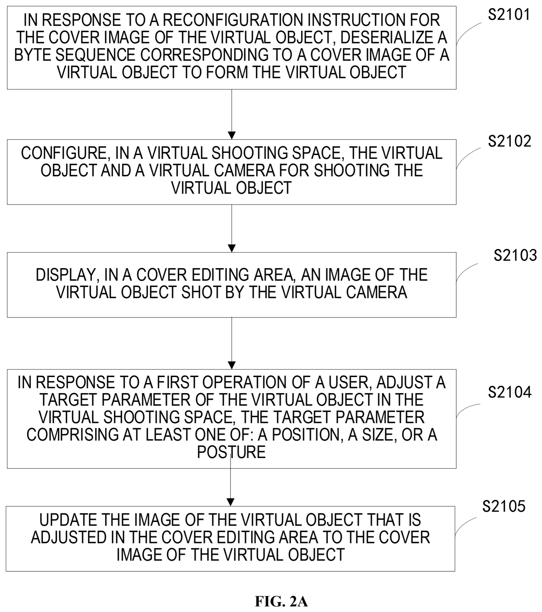

FIG. 2A is a flowchart of a method for reconfiguring a cover image of a virtual object provided in Embodiment 1 of the present application, and the method is applied to an XR device. As shown in FIG. 2A, the method provided in this embodiment includes the following steps.

At block S2101, a byte sequence corresponding to a cover image of a virtual object is deserialized to form the virtual object in response to a reconfiguration instruction of the cover image of the virtual object.

The virtual object may be an object such as a prop or a material in a virtual scene, and both the material and the prop are virtual objects formed by building and assembling at least one geometric body according to a certain relative position and posture. Optionally, the material and the prop further include elements such as controls, materials, logic, sound effects, and special effects.

The material is usually configured to form a virtual scene, for example, plants, animals, houses, etc. in a virtual scene are materials, and the material is usually a static virtual object.

A prop may exist independently of the virtual scene, and is usually used for interaction between virtual characters (avatars, also known as game characters) in the virtual scene or to perform tasks. The prop is usually a movable virtual object. The virtual character may collect the prop into a backpack of the user, and subsequently the virtual character may hold the prop to play or perform tasks, and may also give the prop to other users.

In a game scene, the prop may be an attack equipment, a helmet, an armor, a letter, an intelligence book, etc. The backpack refers to a space (also referred to as an inventory) on the virtual character. In a game scene, a certain number of inventories are set on the game character, such that the virtual character may place game equipment and game props, and at the same time, the backpack will also display the amount of virtual currency held by the virtual character, etc.

Before the material and the prop are published, the cover images of the prop and the material need to be shot. The cover image may intuitively represent the appearance of the prop or the material, which is convenient for other users to understand the material and the prop through the cover images of the material and the prop. Therefore, it is very necessary to shoot a good cover image.

However, the generation method of the cover image of the virtual object is fixed, and the generated cover image may not meet the needs of users. Therefore, it is necessary to reconfigure the cover image of the virtual object.

In this embodiment, the virtual object may be a prop and a material provided by the virtual scene itself, for example, a material in a material library, or may be a user-defined prop and material. In the XR device, in order to meet the personalized needs of users, a UGC function is added, that is, users may customize a material or a prop in an editor provided by the game according to their own needs.

The editor may provide some editing elements such as polyhedrons, controls, materials, physics, logic, music, sound effects, and special effects for users to use. A user may customize a material or a prop in the editor, and the user-defined prop may be called a UGC prop, and the user-defined material is called a UGC material.

The user may also use the editor to customize a virtual scene. The virtual scene in the XR device is an extended reality scene, and the extended reality scene is a 3D virtual scene. The user-defined virtual scene is also called the user's own world, and other users may enter the user-defined scene to play. The user-defined virtual scene may be called a UGC world or a UGC scene.

The customization in the embodiments of the present application may be understood as an object or a scene that the user independently builds and forms by using editing elements provided by the editor in the editor.

The customized material may be published to the material library for other users to view, download and use, and the customized prop may be published to the user's backpack or a fixed platform for the user's own use or for other users to view, claim and use.

As an example, the user may trigger the reconfiguration instruction of the cover image in the following scenarios.

In a scenario 1, after the virtual object is created, the cover image of the virtual object is reconfigured when the virtual object is saved or after the virtual object is saved.

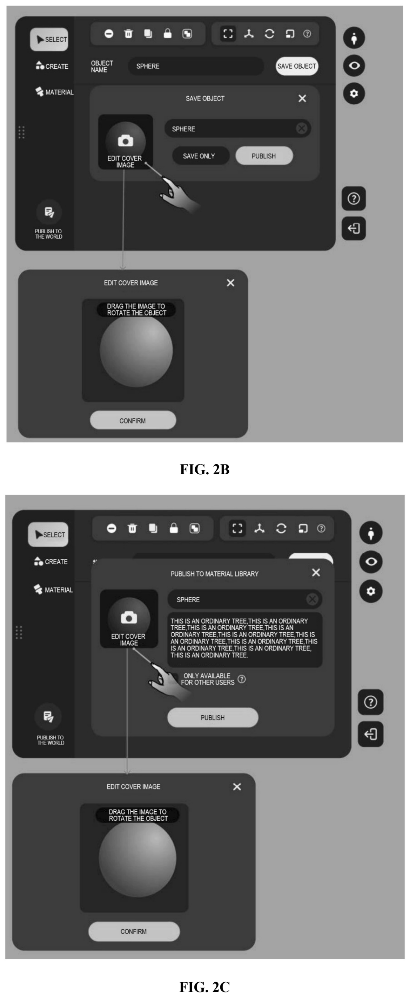

FIG. 2B is a schematic diagram of a reconfiguration entry of a cover image of a virtual object. As shown in FIG. 2B, a reconfiguration control, i.e., the "Edit cover image" control shown in the figure, is set on a saving interface of the virtual object. After the user clicks, double-clicks, long-presses, or hovers on the reconfiguration control, the reconfiguration instruction is generated.

In a scenario 2, the cover image of the virtual object is reconfigured when the virtual object is published. When the virtual object is published, the publication type may be selected, and the publication type includes a prop type and a material type. The user may select to publish the virtual object as a prop or a material.

FIG. 2C is a schematic diagram of another reconfiguration entry of a cover image of a virtual object. As shown in FIG. 2C, a reconfiguration control, i.e., an "Edit cover image" control shown in the figure, is set on a publication interface of the virtual object. After the user clicks, double-clicks, long-presses, or hovers on the reconfiguration control, the reconfiguration instruction is generated.

In a scenario 3, the cover image of the virtual object is reconfigured after the virtual object fails to be published. After the virtual object fails to be published, the virtual object may be republished, or the publication may be abandoned.

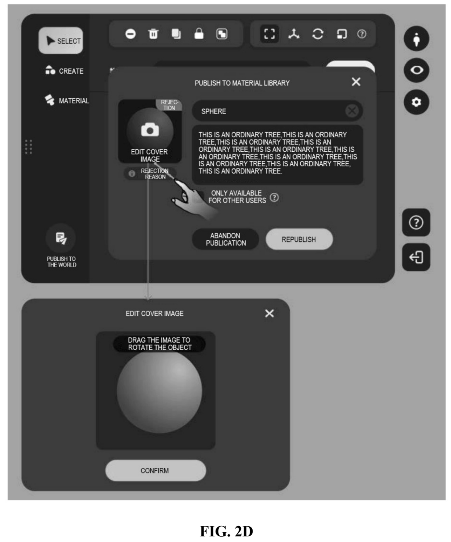

FIG. 2D is a schematic diagram of another reconfiguration entry of a cover image of a virtual object. As shown in FIG. 2D, FIG. 2D is a schematic interface diagram after the virtual object fails to be published, and a reconfiguration control, i.e., an "Edit cover image" control shown in the figure, is set on the interface. After the user clicks, double-clicks, long-presses, or hovers on the reconfiguration control, a reconfiguration instruction is generated.

It may be understood that the above scenarios are only examples, and are not limited to the above scenarios. The user may reconfigure the cover image of the virtual object at any stage after the virtual object is created. For example, after the virtual object is successfully published, the user may still reconfigure the cover image of the virtual object.

In the XR device, the reconfiguration instruction may be an instruction input by the user through a controller of the XR device, or may be an instruction input by gestures, voice, etc., which is not explicitly limited in the embodiments of the present application.

In this embodiment, in response to the reconfiguration instruction of the cover image of the virtual object, the byte sequence corresponding to the cover image of the virtual object is deserialized to form the virtual object.

Serialization refers to a process of converting an object into data in a transmittable and storable format, and deserialization is a process opposite to serialization, and is a process of converting data in a transmittable and storable format into an object. The data in the transmittable and storable format corresponding to the object is called a byte sequence of the object.

The virtual object formed by deserializing the byte sequence corresponding to the cover image of the virtual object is a three-dimensional (3D) object or a 3D model.

At block S2102, the virtual object and a virtual camera for shooting the virtual object in a virtual shooting space are configured.

The virtual camera and the virtual object may be configured in the virtual shooting space according to a predetermined positional relationship. The positional relationship between the virtual camera and the virtual object may also be determined according to a size of the virtual object. The positional relationship includes a target distance between the virtual camera and the virtual object and an orientation of the virtual camera. After the configuration is completed, the virtual camera may automatically shoot the virtual object and display the shot image to the user.

The virtual shooting space may be invisible to the user, that is, the user may not see the virtual object and the virtual camera, and the user sees an image of the virtual object.

At block S2103, an image of the virtual object shot by the virtual camera is displayed in a cover editing area.

The cover editing area is an area for adjusting a cover image. Referring to FIG. 2B to FIG. 2D, after the user clicks the reconfiguration control, an "Edit cover image" interface is displayed below. The interface includes the cover editing area and an " confirm" control. After the cover image reconfiguring is completed, the user may click the "confirm" control to save the reconfigured cover image.

At block S2104, a target parameter of the virtual object in the virtual shooting space is adjusted in response to a first operation of the user, the target parameter includes at least one of : a position, a size, or a posture.

In this embodiment, one or more of the position, the size, and the posture of the virtual object in the virtual shooting space may be adjusted.

By adjusting the posture of the virtual object, the relative pose between the virtual camera and the virtual object changes, and the image shot by the virtual camera changes accordingly. For example, before the adjustment, the virtual camera shoots a side of the virtual object, and after the adjustment, the virtual object shoots a front side or a front side plus a side of the virtual object.

By adjusting the size of the virtual object, the area of the virtual object in the image shot by the virtual camera changes accordingly, which may be achieved by adjusting the size of the virtual object or adjusting the distance between the virtual camera and the virtual object, etc. For example, before the adjustment, the size of the virtual object is small, and the area of the virtual object in the image shot by the virtual camera is small. After the adjustment, the size of the virtual object become large, and the area of the virtual object in the image shot by the virtual camera is large, such that some details of the virtual object may be seen clearly.

Adjusting the position of the virtual object refers to adjusting the distance and direction between the camera and the virtual object. By adjusting the distance and direction between the camera and the virtual object, the image shot by the virtual camera changes accordingly. For example, the area of the virtual object in the image shot by the virtual camera is different, and the angle of the shot virtual object may also change.

As an example, in response to a moving operation in the cover editing area, a posture of the virtual object in the virtual shooting space is adjusted according to a moving direction and/or a moving distance corresponding to the moving operation.

The moving operation may be a moving operation of a cursor, a sliding control, or an interactive ray displayed in the cover editing area, may also be a touch sliding operation of a user's finger, and may also be a touch sliding operation of a touch device such as a touch pen.

In the XR device, the user and the extended reality space interact through the interactive ray. It may be that the user uses the controller of the XR device to control the interactive ray to move up, down, left, or right in the cover editing area, and at the same time, cooperates with other operations such as keys of the controller to implement the moving operation. It may also be that the user uses the controller of the XR device to control the interactive ray to move up, down, left, or right on the sliding control in the cover editing area.

After the moving operation is detected, the moving direction and/or the moving distance corresponding to the moving operation are determined, and the rotation direction and/or the rotation angle of the virtual object are adjusted according to the moving direction and/or the moving distance corresponding to the moving operation, thereby implementing the adjustment of the posture of the virtual object.

In an implementation, the rotation direction of the virtual object is determined according to the moving direction corresponding to the moving operation, and the virtual object in the virtual shooting space is controlled to rotate in the rotation direction. In this implementation, the rotation angle of the virtual object may be a predetermined angle, for example, the rotation angle is 5 degrees or 10 degrees, and then the virtual object is controlled to rotate 5 degrees or 10 degrees in the rotation direction every time the moving operation is detected.

As an example, when the moving direction corresponding to the moving operation is up, down, left, or right, the rotation directions of the virtual object are determined to be the X-axis, the negative X-axis, the Y-axis, and the negative Y-axis in sequence. That is, when the moving direction is up, the rotation direction of the virtual object is the X-axis. When the moving direction is down, the rotation direction of the virtual object is the -X-axis. When the moving direction is left, the rotation direction of the virtual object is the Y-axis. When the moving direction is right, the rotation direction is the -Y-axis.

It may be understood that the correspondence between the four moving directions of up, down, left, or right and the four rotation directions of the X-axis, the negative X-axis, the Y-axis, and the negative Y-axis is not limited to the above example, and may be other correspondences, for example, when the moving direction is up, the rotation direction is the Y-axis, and correspondingly, the relationship between other directions and the coordinate axes also changes accordingly.

In another implementation, the rotation angle of the virtual object is determined according to the moving distance corresponding to the moving operation, and the virtual object in the virtual shooting space is controlled to rotate according to the rotation angle. In this implementation, the rotation direction of the virtual object may be a predetermined direction, for example, the predetermined direction is the X-axis, and then the virtual object is controlled to turn in the X-axis direction according to the rotation angle every time the moving operation is detected.

As an example, the moving distance corresponding to the moving operation is the number of pixels moved. When the number of pixels moved corresponding to the moving operation is M, the rotation angle of the virtual object is determined to be M*N, where N is an integer greater than or equal to 1. When N is equal to 1, the number of pixels moved is M, then the rotation angle is M degrees.

In another implementation, the rotation direction of the virtual object is determined according to the moving direction corresponding to the moving operation, the rotation angle of the virtual object is determined according to the moving distance corresponding to the moving operation, and the virtual object in the virtual shooting space is controlled to rotate according to the rotation angle and the rotation direction. This implementation is a combination of the first two implementations, and the posture adjustment of the virtual object may be more precisely controlled by this implementation.

As an example, the size of the virtual object in the virtual shooting space is adjusted by: in response to detecting a second operation on the image of the virtual object, controlling the image of the virtual object to be in an editing state; and in response to an adjustment operation of the user on the size of the image of the virtual object in the editing state, adjusting the size of the virtual object in the virtual shooting space.

As an example, the second operation may be a hover operation or a long-press operation on an edge of the image of the virtual object.

The editing state may be understood as a state in which a size adjustment may be performed. The editing state is differently displayed from a normal state. The moveable state may be an additional display special effect of the virtual object, or may be a special change state of the virtual object in the present application, for example, changing to a highlighted state, changing to a rotating state, or enlarging and reducing periodically, or generating a rectangular editing box around the image of the virtual object.

In the editing state, the user may drag an edge of the image of the virtual object. By dragging the edge of the virtual object outward, the virtual object is enlarged. By dragging the edge of the virtual object inward, the virtual object is reduced.

When the rectangular editing box is generated around the image of the virtual object in the editing state, the edge or four corners of the rectangular editing box may be dragged to zoom the virtual object.

As an example, the position of the virtual object in the virtual shooting space is adjusted by: in response to detecting a third operation on the image of the virtual object, controlling the image of the virtual object to be in a moveable state; and in response to a drag operation of the user on the image of the virtual object, adjusting the position of the virtual object in the virtual shooting space.

As an example, the third operation may be a hover operation or a long-press operation on an edge of the image of the virtual object.

The moveable state may be understood as a state in which the position adjustment of the virtual object may be performed. The moveable state is differently displayed from the normal state. The moveable state may be an additional display special effect of the virtual object, such as an additional image or text, or may be a special change state of the virtual object in the present application, for example, changing to a highlighted state, changing to a rotating state, or reciprocating between two positions, etc.

The performing a drag operation on the virtual object in the moveable state refers to moving the virtual object as a whole. That is, moving the virtual object from one position to another position, and the position movement of the virtual object is equivalent to moving the distance between the virtual object and the camera, that is, increasing or decreasing the distance between the virtual object and the camera. Taking the XR device as an example, the user uses the controller to control the interactive ray to perform a long-press operation on the image of the virtual object. After the long press of 0.5 second(s), the image of the virtual object changes to the moveable state. At this time, the image of the virtual object is held and dragged to implement the adjustment of the position of the virtual object.

In this embodiment, the editing state and the moveable state of the virtual object may be the same state or different states. For example, the editing state of the virtual object is periodic enlargement and reduction, and the user is informed vividly that the size of the virtual object may be adjusted through the state of enlargement and reduction. The moveable state of the virtual object is to reciprocate between two positions, and the user is informed vividly that the position of the virtual object may be adjusted through the reciprocation, thus bringing a better experience for the user.

Optionally, prompt information is displayed in the cover editing area of the virtual object, in the editing state, or in the moveable state. The prompt information prompts the user how to adjust the virtual object. For example, "Drag the image to rotate the object" is prompted through text.

Optionally, in an implementation, the closer the operation position corresponding to the first operation is to the cover editing area, the smaller the size is and/or the farther the position of the virtual object is. That is, the size and/or the position of the virtual object is adjusted by the distance of the operation position.

At block S2105, an image of the virtual object that is adjusted in the cover editing area is updated to the cover image of the virtual object.

By adjusting one or more of the position, the size, and the posture of the virtual object in the virtual shooting space, the image shot by the virtual camera changes accordingly, and the cover image shot by the virtual camera meets the needs of the user through the adjustment.

In addition, when the user adjusts the position, the size, or the posture of the virtual object in the cover editing area, the adjusted image of the virtual object may be displayed in real time in the cover editing area, such that the user may visually see the adjustment effect, and adjust the virtual object purposefully according to the adjustment effect, which improves the adjustment efficiency and brings a better experience for the user.

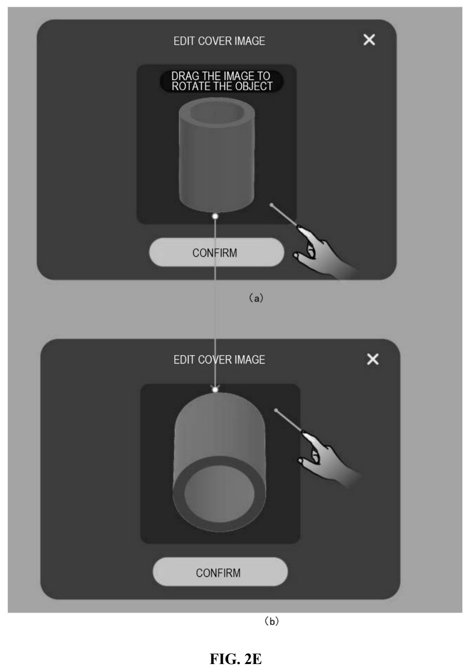

FIG. 2E is a schematic diagram of comparison of a cover image of a virtual object before and after reconfiguring. Referring to FIG. 2E, FIG. 2E is a cover image of the virtual object before reconfiguring, and FIG. 2E is a cover image of the virtual object after reconfiguring. Comparing FIG. 2E with FIG. 2E, the posture of the virtual object has changed. FIG. 2E is a front side and a top side of the virtual object, and FIG. 2E is a front side and a bottom side of the virtual object.

Optionally, a reconfiguration confirmation control is displayed in the cover editing area, for example, the "confirm" control in the interface shown in FIG. 2E. After the user clicks, double-clicks, or long-presses the reconfiguration confirmation control, the reconfigured cover image takes effect, that is, the image of the virtual object that is adjusted in the cover editing area is updated to the cover image of the virtual object.

In this embodiment, when the virtual object is shot, only the virtual object is rendered for the virtual camera, and other objects outside the virtual object are not rendered. The virtual camera may only shoot rendered objects, but may not shoot non-rendered objects, such that the content shot by the virtual camera only includes the rendered object and does not include other objects, that is, other virtual objects in the background that the user may see but are not selected as the cover image to be shot are eliminated, such that the shot content is more aesthetically pleasing and meets the expectations of the user.

Optionally, the background of the image shot by the virtual camera is transparent, and correspondingly, the background of the cover image corresponding to the virtual object is also transparent.

In this embodiment, in response to the reconfiguration instruction of the cover image of the virtual object, the byte sequence corresponding to the cover image of the virtual object is deserialized to form the virtual object; the virtual object and the virtual camera are set in the virtual shooting space, and the image of the virtual object shot by the virtual camera is displayed in the cover editing area; and in response to the first operation of the user, one or more target parameters of the position, the size, or the posture of the virtual object are adjusted, and the image of the virtual object that is adjusted in the cover editing area is updated to the cover image of the virtual object. By adjusting the position, the size, or the posture of the virtual object, the distance, the pose, or the relative size between the virtual camera and the virtual object changes, and the image shot by the virtual camera changes accordingly. By continuously adjusting the target parameter of the virtual object, the cover image of the virtual object that is shot meets the needs of the user.

On the basis of Embodiment 1, Embodiment 2 of the present application provides a method for reconfiguring a cover image of a virtual object, which is configured to determine the position used by the virtual camera in the current cover image reconfiguring before the virtual object and the virtual camera are configured in the virtual shooting space. For the same content, reference may be made to the description of Embodiment 1, and details are not described here again in this embodiment.

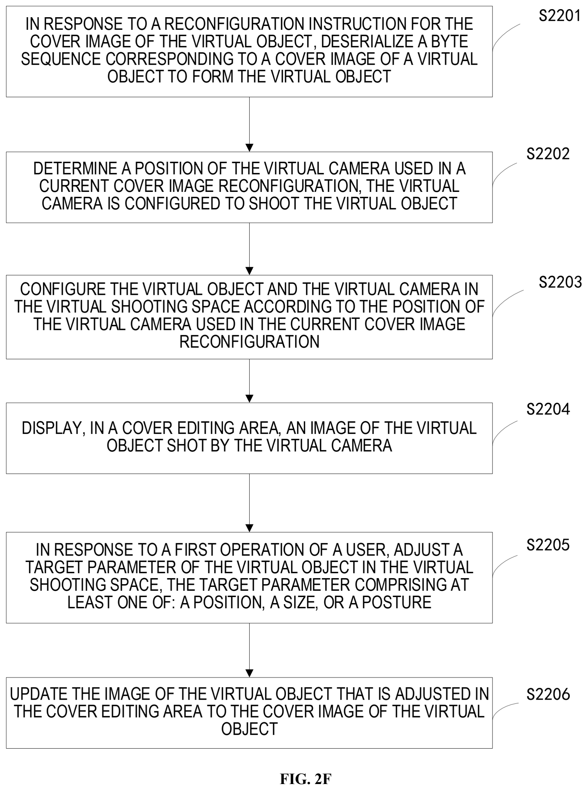

FIG. 2F is a flowchart of a method for reconfiguring a cover image of a virtual object provided in Embodiment 2 of the present application. As shown in FIG. 2F, the method provided in this embodiment includes the following steps.

At block S2201, a byte sequence corresponding to a cover image of a virtual object is deserialized to form the virtual object in response to a reconfiguration instruction of the cover image of the virtual object.

At block S2202, a position of a virtual camera for shooting the virtual object used in the current cover image reconfiguration is determined.

If the cover image of the virtual object has been configured before, a position of the virtual camera when the cover image of the virtual object was latest reconfigured is determined as the position used in the current cover image reconfiguration. In this way, after each time the cover image of the virtual object is reconfigured, the position of the virtual camera needs to be recorded. The position of the virtual camera refers to the position of the virtual camera relative to the virtual object.

If the cover image of the virtual object has not been configured before, a default position of the virtual camera is determined as the position used in the current cover image reconfiguration. The default position of the virtual camera is predetermined or provided by the system.

The default position of the virtual camera may be determined according to a target distance between the virtual camera and the virtual object, and/or an orientation of the virtual camera.

In an implementation, the position of the virtual camera is a predetermined position, that is, the target distance between the virtual camera and the virtual object is a predetermined distance, and the virtual camera is located in a predetermined direction of the virtual object, or the virtual camera is located in a direction perpendicular to a direction where a maximum size of a bounding box of the virtual object is located, and the bounding box of the virtual object has a plurality of sizes.

In another implementation, a target distance between the virtual camera and a center point of the virtual object is determined according to a size of the virtual object, and the virtual camera is located in a predetermined direction of the virtual object, that is, an orientation of the virtual camera is a predetermined fixed direction, or the virtual camera is located in a direction perpendicular to a direction where a maximum size of a bounding box of the virtual object is located, and the bounding box of the virtual object has a plurality of sizes.

Optionally, the target distance between the virtual camera and the center point of the virtual object is determined according to the size of the virtual object by: determining the target distance according to a size of a bounding box of the virtual object.

In this embodiment, a bounding box is set for the virtual object, and the bounding box, also known as a bounding volume, may be regarded as a transparent object that covers or surrounds all or part of the virtual object. The bounding box is configured to assist in detecting a distance between the virtual object and other objects, and the bounding box may be invisible to the user.

The shape of the bounding box of the virtual object is not limited in this embodiment, and the shape of the bounding box may be a cylinder, a cube, a cuboid, an ellipsoid, a sphere, etc., and may also be some irregular three-dimensional shapes.

As an example, there are two ways to determine the target distance between the virtual camera and the center point of the virtual object according to the size of the bounding box of the virtual object.

In a first way, the target distance is determined according to a maximum size of the bounding box of the virtual object, and the bounding box of the virtual object has a plurality of sizes.

When the bounding box of the virtual object is a cuboid bounding box, the cuboid bounding box includes three sizes: a size of the length, a size of the width, and a size of the height, and the maximum size of the bounding box of the virtual object is a maximum value among the length, the width, and the height of the cuboid bounding box. For example, the virtual object is a long rod, and the length, width, and height of the bounding box of the virtual object are 100 cm, 10 cm, and 10 cm, respectively. Then, when calculating the target distance, the target distance is determined according to the length of the bounding box of the virtual object, that is, 100 cm.

When the bounding box of the virtual object is a cylinder, the size of the bounding box includes a size of the diameter and a height of the cylinder, and the maximum size of the bounding box of the virtual object is a maximum value among the diameter and the height of the cylinder bounding box.

As an example, the target distance D between the virtual camera and the center point of the virtual object is D=k*L, where L is the maximum size of the bounding box of the virtual object, k is an adjustment factor, a value of k is predetermined, and a value of k is a number greater than 0. As an example, the value of k is 0.8, 1.5, or 2, etc.

In a second way, the target distance D between the virtual camera and the center point of the virtual object is determined by the following formula:

$$D=k*(L+W+H);$$

where L, W, and H are the length, width, and height of the cuboid bounding box of the virtual object, respectively, k is an adjustment factor, the value of k is predetermined, and the value of k is a number greater than 0. As an example, the value of k is 0.5, 0.8, or 1.2, etc.

In the second way, the bounding box is a cuboid bounding box. When the bounding box of the virtual object is a cylinder, the size of the bounding box includes a diameter and a height of the cylinder. In this case, the above formula may be transformed to obtain D=k*(R+H), where R is the diameter of the cylinder and H is the height of the cylinder.

When the bounding box of the virtual object is a sphere, the target distance is determined according to a diameter or a radius of the sphere, for example, the target distance D=k*R, where R is the diameter of the sphere.

After the target distance between the virtual camera and the virtual object is determined, the orientation of the virtual camera needs to be determined. In an implementation, the virtual camera is located in a predetermined direction of the virtual object, for example, the virtual camera is located on an X-axis, a Y-axis, or a Z-axis of a coordinate system corresponding to the virtual object.

The coordinate system corresponding to the virtual object refers to a coordinate system established with an origin at a center point of the virtual object or a center point of the bounding box of the virtual object.

Certainly, the orientation of the virtual camera is not limited to the X-axis, the Y-axis, or the Z-axis of the coordinate system corresponding to the virtual object, and the orientation of the virtual camera may also be at a predetermined angle with the X-axis, the Y-axis, or the Z-axis, for example, the virtual camera is located on an XY plane and at a predetermined angle with the X-axis.

In another implementation, the virtual camera is located in a direction perpendicular to a direction where the maximum size of the bounding box of the virtual object is located, and the perpendicular direction is a direction in the coordinate system corresponding to the virtual object. In the coordinate system corresponding to the virtual object, the direction where the maximum size of the bounding box of the virtual object is located is determined first, and then the perpendicular direction of the direction where the maximum size is located is determined. For example, if the direction where the maximum size of the bounding box of the virtual object is located is the X-axis direction, the orientation of the virtual camera is located in a direction perpendicular to the X-axis.

By configuring the virtual camera in the direction perpendicular to the direction where the maximum size of the bounding box of the virtual object is located, the virtual camera may shoot an appearance of the virtual object in the direction where the maximum size is located, such that the shot virtual object may be more complete and may more truly reflect the appearance and characteristics of the virtual object.

At block S2203, the virtual object and the virtual camera in a virtual shooting space are configured according to the position of the virtual camera used in the current cover image reconfiguration.

After the position of the virtual camera is determined, according to the position of the virtual camera, the virtual camera and the virtual object are set in the virtual shooting space, and the lens of the virtual camera faces the virtual object. After the configuration is completed, the virtual camera automatically shoots the virtual object to obtain an image of the virtual object. The virtual object is a 3D three-dimensional model, and the image shot by the virtual camera is a 2D plane image.

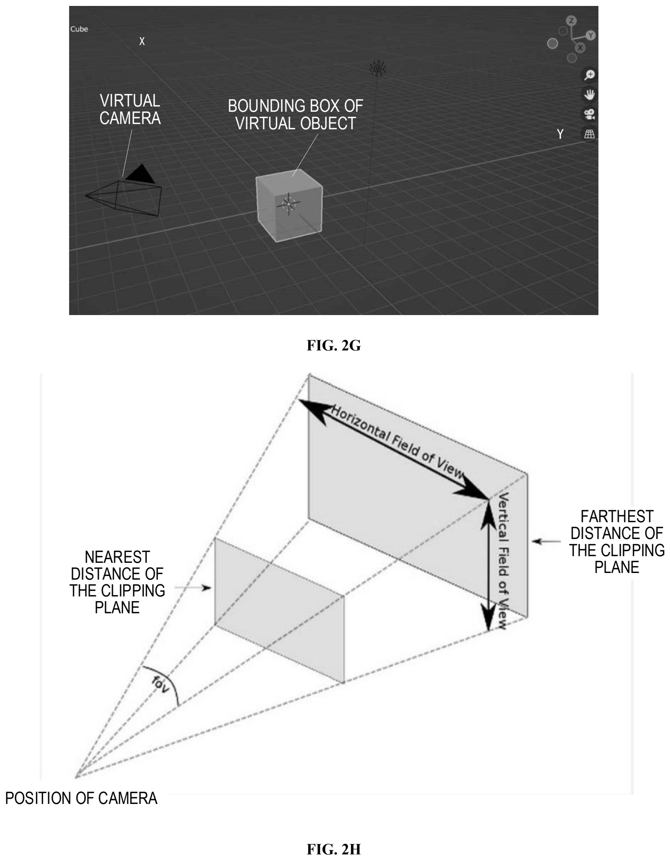

FIG. 2G is a schematic diagram of a positional relationship between a virtual camera and a virtual object. As shown in FIG. 2G, the bounding box of the virtual object is a cube, and a coordinate system is established with an origin at a center point of the bounding box of the virtual object. As shown in the figure, the virtual camera is located in a plane formed by the X-axis and the -Y-axis, and forms a predetermined angle with the X-axis.

The virtual camera has a similar function as a physical camera in a real environment, and the virtual camera also has parameters. As an example, the parameters of the virtual camera include a field of view (FOV) of the virtual camera and a distance of a clipping plane of the virtual camera.

As an example, the field of view of the virtual camera is 90 degrees. When the field of view of the virtual camera is 90 degrees and the target distance D between the virtual camera and the center point of the virtual object is D=0.5*(L+W+H), any orientation of the virtual object may be covered by the virtual camera in a large area, such that the shot cover image is complete and aesthetically pleasing. L, W, and H are the length, width, and height of the cuboid bounding box of the virtual object.

The distance of the clipping plane of the virtual camera includes a nearest distance and a farthest distance. The nearest distance of the clipping plane refers to a nearest drawing point of the virtual camera, and the farthest distance of the clipping plane refers to a farthest drawing point of the virtual camera. The nearest drawing point and the farthest drawing point may be understood as distances from a position where rendering of the virtual object starts and a position where rendering of the virtual object stops to the virtual camera. Referring to FIG. 2H, FIG. 2H is a schematic diagram of a parameter of the virtual camera.

The configuration of the nearest distance and the farthest distance of the clipping plane of the virtual camera may satisfy display problems of some extreme geometric bodies, and avoid the cover image from being cut due to a small drawing interval of the virtual camera. For example, when shooting a cuboid with a length and a width of 1 m and a height of 1000 m, it may be drawn normally when the "length/width" plane is directly facing or slightly inclined to the virtual camera, and the three-dimensional object at a close or far distance will not be cut off due to insufficient drawing range. The cutting display here means that a complete virtual object may not be displayed, and only a part of the virtual object may be displayed, and the part that may not be displayed is equivalent to being cut off.

Optionally, the field of view of the virtual camera and/or the distance of the clipping plane of the virtual camera may be adjusted according to the target distance between the virtual camera and the center point of the virtual object.

The field of view of the virtual camera is negatively correlated with the target distance, that is, the larger the target distance, the smaller the field of view of the virtual camera may be adjusted.

The nearest distance of the clipping plane of the virtual camera is positively correlated with the target distance, that is, the larger the target distance, the larger the nearest distance of the clipping plane of the virtual camera.

The parameters of the virtual camera may be adjusted according to the actual effect of the application. By adjusting the parameters of the virtual camera, the shot cover image is more aesthetically pleasing, avoiding a lot of blank areas on edges of the cover image, and making the pattern display and filling in the cover image plumper.

At block S2204, an image of the virtual object shot by the virtual camera is displayed in a cover editing area.

At block S2205, a target parameter of the virtual object in the virtual shooting space is adjusted in response to a first operation of the user, the target parameter includes at least one of: a position, a size, or a posture.

At block S2206, an image of the virtual object that is adjusted in the cover editing area is updated to the cover image of the virtual object.

In this embodiment, before the virtual object and the virtual camera are configured in the virtual shooting space, the position used by the virtual camera in the current cover image reconfiguration is determined. According to the position used by the virtual camera in the current cover image reconfiguration, the virtual object and the virtual camera are configured in the virtual shooting space, and the virtual camera automatically shoots the virtual object. The cover image reset by this method is more complete and aesthetically pleasing.

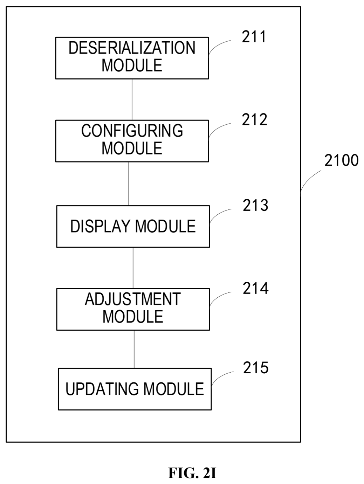

In order to better implement the method for reconfiguring a cover image of a virtual object in the embodiments of the present application, the embodiments of the present application further provide an apparatus for reconfiguring a cover image of a virtual object. FIG. 2I is a schematic structural diagram of an apparatus for reconfiguring a cover image of a virtual object provided in Embodiment 3 of the present application. As shown in FIG. 2I, the apparatus 2100 for reconfiguring a cover image of a virtual object may include:

a deserialization module 211, configured to deserialize a byte sequence corresponding to a cover image of a virtual object to form the virtual object in response to a reconfiguration instruction of the cover image of the virtual object;

a configuring module 212, configured to configure the virtual object and a virtual camera in a virtual shooting space for shooting the virtual object;

a display module 213, configured to display an image of the virtual object shot by the virtual camera in a cover editing area;

an adjustment module 214, configured to adjust a target parameter of the virtual object in the virtual shooting space in response to a first operation of a user, where the target parameter includes at least one of : a position, a size, or a posture; and

an updating module 215, configured to update an image of the virtual object that is adjusted in the cover editing area to the cover image of the virtual object.

In some embodiments, the adjustment module 214 is further configured to:

in response to a moving operation in the cover editing area, adjust the posture of the virtual object in the virtual shooting space according to a moving direction and/or a moving distance corresponding to the moving operation in the cover editing area.

In some embodiments, the adjustment module 214 is further configured to:

determine a rotation direction of the virtual object according to the moving direction corresponding to the moving operation; and
control the virtual object in the virtual shooting space to rotate in the rotation direction.

In some embodiments, the adjustment module 214 is further configured to:
determine the rotation directions of the virtual object to be the X-axis, the negative X-axis, the Y-axis, and the negative Y-axis in sequence when the moving direction corresponding to the moving operation is up, down, left, or right.

In some embodiments, the adjustment module 214 is further configured to:

determine a rotation angle of the virtual object according to the moving distance corresponding to the moving operation; and
control the virtual object in the virtual shooting space to rotate according to the rotation angle.

In some embodiments, the moving distance corresponding to the moving operation is the number of pixels moved, and the adjustment module 214 is further configured to:
determine the rotation angle of the virtual object to be M*N when the number of pixels moved corresponding to the moving operation is M, where N is an integer greater than or equal to 1.

In some embodiments, a closer an operation position corresponding to the first operation is to the cover editing area, a smaller the size of the virtual object is and/or a farther the position of the virtual object is.

In some embodiments, the adjustment module 214 is further configured to:

control the image of the virtual object to be in an editing state in response to detecting a second operation on the image of the virtual object; and
adjust the size of the virtual object in the virtual shooting space in response to an adjustment operation of the user on the size of the image of the virtual object in the editing state.

In some embodiments, the adjustment module 214 is further configured to:

control the image of the virtual object to be in a moveable state in response to detecting a third operation on the image of the virtual object; and adjust the position of the virtual object in the virtual shooting space in response to a drag operation of the user on the image of the virtual object.

In some embodiments, a background of the image shot by the virtual camera is transparent.

In some embodiments, when the virtual object is shot, the virtual object is rendered, and other objects outside the virtual object are not rendered.

In some embodiments, the configuring module 212 is further configured to:

determine a position of the virtual camera used in a current cover image reconfiguration; and configure the virtual object and the virtual camera in a virtual shooting space according to the position of the virtual camera used in the current cover image reconfiguration.

In some embodiments, the configuring module 212 is further configured to:
if the cover image of the virtual object has been configured before, determine a position of the virtual camera when the cover image of the virtual object was latest reconfigured as the position used in the current cover image reconfiguration.

In some embodiments, the configuring module 212 is further configured to:
if the cover image of the virtual object has not been configured before, determine a default position of the virtual camera as the position used in the current cover image reconfiguration.

In some embodiments, the default position of the virtual camera includes a target distance between the virtual camera and a center point of the virtual object, and the configuring module 212 is further configured to:
determine the target distance between the virtual camera and the center point of the virtual object according to a size of the virtual object.

In some embodiments, the configuring module 212 is further configured to:
determine the target distance according to a size of the bounding box of the virtual object.

It should be understood that the apparatus embodiments and the method embodiments may correspond to each other, and reference may be made to the method embodiments for similar descriptions. To avoid repetition, details are not described here again.

The apparatus 2100 of the embodiments of the present application is described above from the perspective of functional modules in conjunction with the drawings. It should be understood that the functional modules may be implemented in a hardware form, may also be implemented by instructions in a software form, and may also be implemented by a combination of hardware and software modules. Specifically, each step of the method embodiments in the embodiments of the present application may be completed by an integrated logic circuit of hardware in a processor and/or instructions in a software form, and the steps of the method disclosed in the embodiments of the present application may be directly embodied as being executed and completed by a hardware decoder processor, or executed and completed by a combination of hardware and software modules in a decoder processor. Optionally, the software module may be located in a mature storage medium in the art such as a random access memory, a flash memory, a read-only memory, a programmable read-only memory, an electrically erasable programmable memory, and a register. The storage medium is located in the memory, and the processor reads information in the memory and completes the steps in the above method embodiments in combination with its hardware.

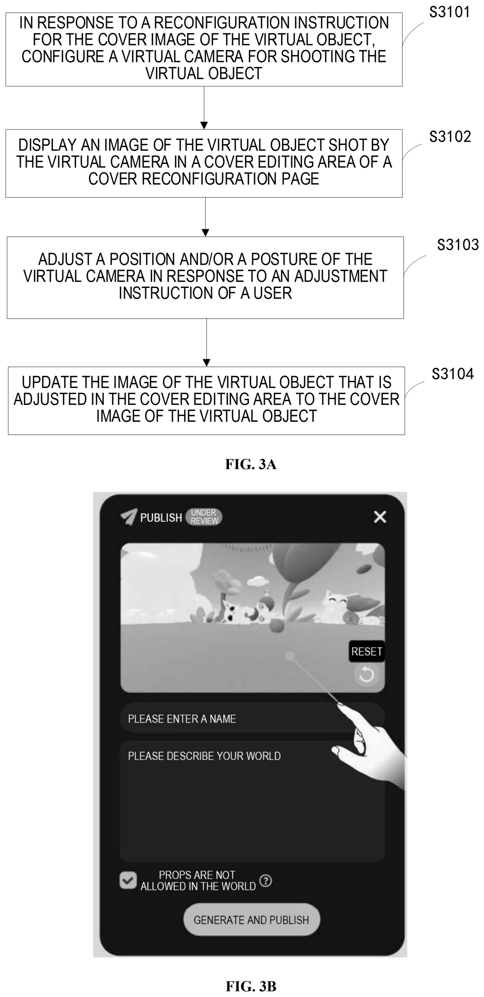

FIG. 3A is a flowchart of a method for reconfiguring a cover image of a virtual object provided in Embodiment 1 of the present application, and the method is applied to an XR device. As shown in FIG. 3A, the method provided in this embodiment includes the following steps.

At block S3101, a virtual camera is configured in response to a reconfiguration instruction of a cover image of a virtual object for shooting the virtual object.

The virtual object may be virtual elements such as a virtual scene, a prop or a material in the virtual object. The virtual scene includes a lot of virtual elements, and the virtual elements include, but are not limited to, virtual props, materials, controls, etc.

The virtual scene may be a 3D extended reality scene provided by the XR device, or may be a 2D virtual scene provided by a mobile phone, a computer, etc. Both the material and the prop are virtual objects formed by building and assembling at least one geometric body according to a certain relative position and posture. Optionally, the material and the prop further include elements such as controls, materials, logic, sound effects, and special effects.

The material is usually configured to form a virtual object, for example, plants, animals, houses, etc. in the virtual object are materials, and the material is usually a static virtual object.

A prop may exist independently of the virtual object, and is usually used for interaction between virtual characters (avatars, also known as game characters) in the virtual object or to perform tasks. The prop is usually a movable virtual object, and the virtual character may collect the prop into a backpack of the user. Subsequently, the virtual character may hold the prop to play or perform tasks, and may also give the prop to other users. In a game scene, the prop may be an attack equipment, a helmet, an armor, a letter, an intelligence book, etc.

The virtual object may be an object provided by a client itself, or may be an object defined by the user himself. Taking the XR device as an example, in order to meet the personalized needs of users, a UGC function is added, that is, users may customize a virtual object in an editor provided by the game according to their own needs, and the user-defined virtual object is also called the user's own world, and other users may enter the user-defined scene to play.

The editor may provide some editing elements such as polyhedrons, controls, materials, physics, logic, music, sound effects, special effects and materials for users to use, and users may customize virtual objects, materials and props in the editor. The user-defined virtual object may be called a UGC world or a UGC scene, the user-defined prop may be called a UGC prop, and the user-defined material is called a UGC material. The customization in the embodiments of the present application may be understood as a virtual object that the user independently builds and forms by using editing elements provided by the editor in the editor.

After creating the virtual object, the user may publish the virtual object created by the user. Publishing the virtual object refers to publishing the virtual object to the network. Only the successfully published virtual object may be queried by other users. If the user-defined virtual object is not published, only the user may view it.

Before the virtual object is published, the cover image of the virtual object is usually shot. The cover image may intuitively represent the content, appearance and other features of the virtual object, which is convenient for other users to understand the virtual object through the cover image of the virtual object. Therefore, it is very necessary to shoot a good cover image.

At present, the cover image of the virtual object may be drawn by the user according to the content of the virtual object, and the cover image of the virtual object is fixed, which may not meet the needs of users. Based on this, the embodiments of the present application provide a method for reconfiguring a cover image of a virtual object, which may reconfigure the cover image of the virtual object.

The user opens a cover reconfiguration page, a cover editing area and a reset control are displayed on the cover reconfiguration page, and a cover image of the virtual object is displayed in the cover editing area. The cover image displayed in the cover editing area is shot by a virtual camera set in the virtual shooting space, and the virtual camera is configured to shoot the virtual object.

When the cover image of the virtual object is shot for the first time, the virtual camera is set according to an initial position and an initial posture of the virtual camera, and the initial position and the initial posture may be a fixed position and posture predetermined by the user, or may be a position and posture set according to a size of the virtual object. The virtual object is shot according to the initial position and the initial posture of the virtual camera, and the cover image corresponding to the virtual object is generated according to the image of the virtual object shot by the virtual camera.

In this embodiment, the cover image displayed in the cover editing area may be an initial cover image or a reconfigured cover image.

If the cover image in the cover editing area may not meet the user needs, the user may trigger the reconfiguration of the cover image. For example, the user inputs a reconfiguration instruction through a reconfiguration control on the cover reconfiguration page, and the reconfiguration instruction is configured to reconfigure the cover image of the virtual object. The user inputs the reconfiguration instruction by clicking, double-clicking, long-pressing, or hovering on the reset control, etc.

As an example, the user may trigger the reconfiguration instruction of the cover image in the following scenarios.

In a scenario 1, after the virtual object is created, the cover image of the virtual object is reconfigured when the virtual object is saved or after the virtual object is saved.

In this scenario, the cover reconfiguration page is a saving page of the virtual object, and the reconfiguration control is set on the saving page of the virtual object, and the user inputs the reconfiguration instruction through the reconfiguration control.

In a scenario 2, the cover image of the virtual object is reconfigured when the virtual object is published.

In this scenario, the cover reconfiguration page is a publication page of the virtual object. FIG. 3B is a schematic diagram of a publication page of a virtual scene. As shown in FIG. 3B, a cover image of the virtual scene and a publishing control are displayed on the publication page of the virtual scene. Optionally, the publication page also includes a reconfiguration control, and the user inputs the reconfiguration instruction through the reconfiguration control.

In a scenario 3, the cover image of the virtual object is reset after the virtual object fails to be published. After the virtual object fails to be published, the virtual object may be republished, or the publication may be abandoned.

If the virtual object fails to be published, prompt information of failure publication will be displayed on the publication page, and the user may reconfigure the cover image of the virtual object again on the publication page.

In a scenario 4, the cover image of the virtual object is reconfigured when the user views the virtual object through the user's own homepage or other entries.

After the virtual object is published, the user may also view the virtual object through the user's own homepage. A cover image of the virtual object and a reconfiguration control are displayed on an introduction interface of the virtual object. The introduction interface of the virtual object in this scenario is the cover reconfiguration page.

The user may also view the virtual object through other entries. For example, when the user views the virtual object through an application market, a cover image of the virtual object and a reset control are displayed on an introduction interface of the virtual object.

In this embodiment, when the reconfiguration instruction is received, the XR device may have rendered the virtual object, or may not have rendered the virtual object. If it is determined that the virtual object is not rendered, the byte sequence corresponding to the virtual object is acquired, the byte sequence corresponding to the virtual object is deserialized to form the virtual object, and a virtual camera is set for the virtual object. The virtual object formed by deserialization is a 3D virtual object, that is, a rendered virtual object.

When the reconfiguration instruction is received, if it is determined that the virtual object has been rendered, the virtual camera is set for the virtual object.

Serialization refers to a process of converting an object into data in a transmittable and storable format, and deserialization is a process opposite to serialization, and is a process of converting data in a transmittable and storable format into an object. The data in the transmittable and storable format corresponding to the object is called a byte sequence of the object.

The byte sequence corresponding to the virtual object is acquired by: if the byte sequence corresponding to the virtual object is stored locally, the byte sequence corresponding to the virtual object is read from a local memory; and if the byte sequence corresponding to the virtual object is not stored locally, the byte sequence corresponding to the virtual object is downloaded from a server.

At block S3102, an image of the virtual object shot by the virtual camera is displayed in a cover editing area of a cover reconfiguration page.

After the virtual camera is set for the virtual object, the virtual camera may automatically shoot the virtual object and display the shot image in the cover editing area in real time. The virtual camera and the virtual object may be invisible to the user, that is, the user may not see the virtual camera and the virtual object, and the user sees the image of the virtual object.

At block S3103, a position and/or a posture of the virtual camera is adjusted in response to an adjustment instruction of the user.

In this embodiment, the position and/or the posture of the virtual camera may be adjusted. By adjusting the posture and/or the position of the virtual camera, the angle and/or the content of the virtual object shot by the virtual camera changes until an image that satisfies the user is shot. When the virtual camera is arranged outside the virtual object, the angle of the virtual object shot by the virtual camera changes by adjusting the position and/or the posture of the virtual camera. When the virtual camera is arranged inside the virtual object, the content and/or the angle of the virtual object shot by the virtual camera are different by adjusting the position and/or the posture of the virtual camera. For example, when the virtual object is a virtual scene, virtual elements in the virtual scene shot by the virtual camera may be different by adjusting the position and/or the posture of the virtual camera, that is, the content of the shot virtual object is different.

When the virtual object is the virtual scene, the virtual camera may be arranged in a bounding box of the virtual scene, and the position and/or the posture of the virtual camera in the bounding box of the virtual scene is adjusted by adjusting the position and/or the posture of the virtual camera, without affecting a posture of the virtual scene itself. It should be noted that adjusting the position and/or the posture of the virtual camera in the virtual scene changes the position and angle in a coordinate system of the camera itself, rather than the position and angle in the coordinate system of the virtual scene. The coordinate system of the virtual camera is different from the coordinate system of the virtual scene. For example, adjusting the coordinate of the virtual camera on the Z-axis is equivalent to adjusting a distance of the virtual camera. For another example, adjusting the rotation angle of the virtual camera on the X-axis, the virtual camera is located on the X-axis before the adjustment, and the virtual camera has a certain angle with the X-axis after the adjustment.

When the virtual object is a prop or a material, the virtual camera may be arranged outside the bounding box of the virtual object. The prop, the material and the virtual camera usually adopt the same coordinate system, or it may be understood that the prop, the material and the virtual camera are arranged in the same virtual shooting space.

The bounding box, also known as a bounding volume, may be regarded as a transparent object that covers or surrounds all or part of the virtual object, and the bounding box may be invisible to the user.

The adjustment instruction may be a sliding operation of the user on the cover editing area, or may be a first operation of the user on the direction control. The user adjusts the position and posture of the virtual camera through different operations, and specific operations are not limited in this embodiment.

In an implementation, the position and/or the posture of the virtual camera is adjusted in response to a moving operation in the cover editing area.

The moving operation may be a moving operation of a cursor, a sliding control, or an interactive ray displayed in the cover editing area, may also be a touch sliding operation of a user's finger, and may also be a touch sliding operation of a touch device such as a touch pen.

In the XR device, the user and the extended reality space interact through the interactive ray. It may be that the user uses the controller of the XR device to control the interactive ray to move up, down, left, or right in the cover editing area, and at the same time, cooperates with other operations such as keys of the controller to implement the moving operation. It may also be that the user uses the controller of the XR device to control the interactive ray to move up, down, left, or right on the sliding control in the cover editing area.

In another implementation, the position and/or the posture of the virtual camera is adjusted in response to a first operation of the user on the direction control.

The direction control is configured to control a moving direction and/or a direction of rotation of the virtual camera, such that the position and/or the posture of the virtual camera may be controlled. The direction control may be a virtual direction control displayed on the cover reconfiguration page, or a physical direction control on the controller of the XR device.

The controller may be a physical controller such as a handle and a glove of the XR device. In this embodiment, the direction control may be a physical rocker on the controller, and the physical rocker may move forward, backward, left, or right, or move in any direction. The direction control may also be a touchpad on the controller, and the user slides forward, backward, left, or right on the touchpad, or slides in any direction to control the moving direction of the virtual camera. The direction control may also be four direction controls on the controller, and the four direction controls are configured to control four directions of forward, backward, left, or right.

The virtual direction control is similar to the physical direction control, and is located on the cover reconfiguration page, and the user may control the virtual direction control through the interactive ray.

In another implementation, the posture of the virtual camera is adjusted in response to a moving operation in the cover editing area, and the position of the virtual camera is adjusted in response to a first operation of the user on the direction control of the controller.

This implementation is a combination of the first two implementations, that is, the posture of the virtual camera is adjusted through the moving operation in the cover editing area, and the position of the virtual camera is adjusted through the direction control on the handle, which makes the adjustment of the posture and position of the virtual camera more convenient.

At block S3104, an image of the virtual object that is adjusted in the cover editing area is updated to the cover image of the virtual object.

By adjusting the position and/or the posture of the virtual camera, the image of the virtual object shot by the virtual camera changes accordingly, and the cover image shot by the virtual camera meets the needs of the user through the adjustment.

In addition, when the user adjusts the position and/or the posture of the virtual camera, the adjusted image of the virtual object shot by the virtual camera may be displayed in real time in the cover editing area, such that the user may visually see the adjustment effect, and adjust the virtual object purposefully according to the adjustment effect, which improves the adjustment efficiency and brings a better experience for the user.

Optionally, a reconfiguration confirmation control is displayed in the cover editing area, and after the user clicks, double-clicks, or long-presses the reconfiguration confirmation control, the reconfigured cover image takes effect, that is, the image of the virtual object that is adjusted in the cover editing area is determined as the cover image of the virtual object.

Alternatively, when the user closes the cover reconfiguration page, the image of the virtual object that is adjusted in the cover editing area is saved as the cover image of the virtual object. Alternatively, when the user clicks a publishing control or a saving control of the virtual object, the image of the virtual object that is adjusted in the cover editing area is saved as the cover image of the virtual object.

Optionally, the background of the image shot by the virtual camera is transparent, and correspondingly, the background of the cover image corresponding to the virtual object is also transparent.

Optionally, when the virtual camera shoots the virtual object, some virtual elements in the virtual object that need to be shot are rendered, and other virtual elements are not rendered, such that the content shot by the virtual camera only includes the rendered virtual elements and does not include other virtual elements. That is, some virtual elements in the virtual object are eliminated, such that the shot content is more aesthetically pleasing and meets the expectations of the user.

Taking the virtual scene as an example, the background in the virtual scene may be eliminated, and only the foreground object in the virtual scene is shot. The background may be a skybox, and the skybox is a common technique configured to enhance scene expressiveness, which is generally implemented by wrapping a texture around the camera. This texture is usually some sky, mountains, or skyscrapers, etc.

The virtual scene is divided into a creation mode and a preview mode. The preview mode may be understood as a final product representation of the virtual scene, that is, an image presented to the user, and the creation mode is an image seen by a creator when creating the virtual scene. There will be a lot of visual controls in the creation mode, and the visual controls may be music, a spawn point, and code blocks of the virtual scene, etc. These visual controls will not be displayed in the preview mode, and the visual controls in the creation mode may be eliminated when the cover image is shot.

The virtual elements that are not shot in the virtual scene may be marked, and the marked virtual elements are not rendered in the shooting process.

In this embodiment, in response to the reconfiguration instruction of the cover image of the virtual object, the virtual camera for shooting the virtual object is set; the image of the virtual object shot by the virtual camera is displayed in the cover editing area of the cover reconfiguration page; the position and/or the posture of the virtual camera is adjusted in response to the adjustment instruction of the user; and the image of the virtual object that is adjusted in the cover editing area is updated to the cover image of the virtual object. By adjusting the position and/or the posture of the virtual camera, the image of the virtual object shot by the virtual camera changes accordingly, such that the cover image of the virtual object shot by the virtual camera meets the needs of the user.

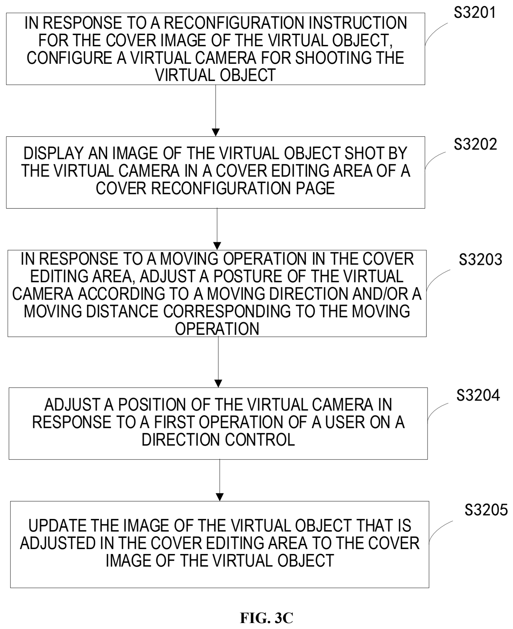

On the basis of embodiment 1, embodiment 2 of the present application provides a method for reconfiguring a cover image of a virtual object, which is configured to explain a specific adjustment method of step S3103 in embodiment 1, that is, to explain a specific adjustment method of the position and/or posture of the virtual camera. For the same content, reference may be made to the description of embodiment 1, and details are not described here again in this embodiment. FIG. 3C is a flowchart of a method for reconfiguring a cover image of a virtual object provided in embodiment 2 of the present application. As shown in FIG. 3C, the method provided in this embodiment includes the following steps.

At block S3201, a virtual camera is configured in response to a reconfiguration instruction of a cover image of a virtual object for shooting the virtual object.

At block S3202, an image of the virtual object shot by the virtual camera is displayed in a cover editing area of a cover reconfiguration page.

At block S3203, in response to a moving operation in the cover editing area, a posture of the virtual camera is adjusted according to a moving direction and/or a moving distance corresponding to the moving operation.

The moving operation may be a moving operation of a cursor, a sliding control, or an interactive ray displayed in the cover editing area, may also be a touch sliding operation of a user's finger, and may also be a touch sliding operation of a touch device such as a touch pen.

After the moving operation is detected, the moving direction and/or the moving distance corresponding to the moving operation are determined, and the rotation direction and/or the rotation angle of the virtual camera are adjusted according to the moving direction and/or the moving distance corresponding to the moving operation, thereby implementing the adjustment of the posture of the virtual camera.

In an implementation, the rotation direction of the virtual camera is determined according to the moving direction corresponding to the moving operation, and the virtual camera is controlled to rotate in the rotation direction.

In this implementation, the rotation angle of the virtual camera may be a predetermined angle, for example, the rotation angle is 5 degrees or 10 degrees, and then the virtual camera is controlled to rotate 5 degrees or 10 degrees in the rotation direction every time the moving operation is detected.

As an example, when the moving direction corresponding to the moving operation is up, down, left, or right, the rotation directions of the virtual camera are determined to be the X-axis, the negative X-axis, the Y-axis, and the negative Y-axis in sequence. That is, when the moving direction is up, the rotation direction of the virtual camera is the X-axis. When the moving direction is down, the rotation direction of the virtual camera is the -X-axis. When the moving direction is left, the rotation direction of the virtual camera is the Y-axis. When the moving direction is right, the rotation direction is the -Y-axis.

Optionally, when the virtual camera rotates in the positive direction and the negative direction of the X-axis, the rotation angle has an upper limit and a lower limit. As an example, the angles of the upper limit and the lower limit are 90 degrees, that is, the maximum rotation angles in the positive direction and the negative direction of the X-axis are 90 degrees. This is because the rotation angle of the X-axis controls the rotation angle of the camera in the up and down direction. When the rotation angle of the camera on the X-axis is greater than 90 degrees, the shot image is an upside-down image for the user, which does not conform to the viewing angle of the user's eyes.

It may be understood that the correspondence between the four moving directions of up, down, left, or right and the four rotation directions of the X-axis, the negative X-axis, the Y-axis, and the negative Y-axis is not limited to the above example, and may be other correspondences, for example, when the moving direction is up, the rotation direction is the Y-axis, and correspondingly, the relationship between other directions and the coordinate axes also changes accordingly.

In another implementation, the rotation angle of the virtual camera is determined according to the moving distance corresponding to the moving operation, and the virtual camera is controlled to rotate according to the rotation angle. In this implementation, the rotation direction of the virtual camera may be a predetermined direction, for example, the predetermined direction is the X-axis, and then the virtual camera is controlled to turn in the X-axis direction according to the rotation angle every time the moving operation is detected.

As an example, the moving distance corresponding to the moving operation is the number of pixels moved. When the number of pixels moved corresponding to the moving operation is M, the rotation angle of the virtual camera is determined to be M*N, where N is an integer greater than or equal to 1. When N is equal to 1, the number of pixels moved is M, then the rotation angle is M degrees.

In another implementation, the rotation direction of the virtual camera is determined according to the moving direction corresponding to the moving operation, the rotation angle of the virtual camera is determined according to the moving distance corresponding to the moving operation, and the virtual camera is controlled to rotate according to the rotation angle and the rotation direction. This implementation is a combination of the first two implementations, and the posture adjustment of the virtual camera may be more precisely controlled by this implementation.

At block S3204, a position of the virtual camera is adjusted in response to a first operation of a user on a direction control.

In this embodiment, the direction control is configured to control the moving direction of the virtual camera, so as to control the position of the virtual camera. The direction control is a virtual direction control displayed on the cover reconfiguration page, or a physical direction control on the controller of the XR device.

As an example, in response to the first operation of the user on the direction control, the target moving direction of the virtual camera is determined according to the direction corresponding to the first operation, and the virtual camera is controlled to move in the target moving direction, thereby implementing the adjustment of the position of the virtual camera.

Optionally, when the direction corresponding to the first operation is forward, backward, left, or right, the target moving directions of the virtual camera are determined to be the Z-axis, the negative Z-axis, the X-axis, and the negative X-axis in sequence. Taking the rocker of the handle as an example, when the user pushes the rocker of the handle forward, the moving direction of the virtual camera is the Z-axis. When the user pushes the rocker of the handle backward, the moving direction of the virtual camera is the negative Z-axis. When the user pushes the rocker of the handle to the left, the moving direction of the virtual camera is the X-axis. When the user pushes the rocker of the handle to the right, the moving direction of the virtual camera is the negative X-axis.

It may be understood that the correspondence between the four directions of forward, backward, left, or right of the direction control and the four directions of the Z-axis, the negative Z-axis, the X-axis, and the negative X-axis of the virtual camera is not limited to the above example, and may be other correspondences, for example, the moving direction of the virtual camera corresponding to the forward of the direction control is the X-axis, and correspondingly, the relationship between other directions and the coordinate axes also changes accordingly.

Optionally, the virtual camera moves in the target moving direction according to a predetermined moving speed or a predetermined moving distance. The predetermined moving speed or the predetermined moving distance may be set by the user according to his own needs, or a fixed value may be used.

Optionally, a reset control is also displayed on the cover reconfiguration page, and in response to a second operation of the user on the reset control, the position of the virtual camera is adjusted to an initial position. The posture of the virtual camera may be kept unchanged or may be adjusted to an initial posture.

Referring to FIG. 3B, the control with an arrow in the lower right corner of the cover editing area is the reset control. Certainly, the reset control is not limited to the form shown in FIG. 3B, and the position of the reset control is not limited to the position shown in FIG. 3B.

By configuring the reset control, it is convenient for the user to quickly reset to the initial position when the virtual camera moves to a far distance. After the virtual camera is reset to the initial position and the initial posture, the cover image displayed in the cover editing area is a default cover image, and the default cover image is a cover image shot by the virtual camera at the initial position and the initial posture.

At block S3205, an image of the virtual object that is adjusted in the cover editing area is updated to the cover image of the virtual object.

In this embodiment, the posture of the virtual camera is adjusted according to the moving direction and/or the moving distance corresponding to the moving operation in the cover editing area, and the position of the virtual camera is adjusted according to the first operation of the user on the direction control, such that the modification operation of the cover image of the virtual object is simple and convenient.

It should be noted that, in other embodiments of the present application, the position of the virtual camera may be adjusted through the moving operation in the cover editing area, and the posture of the virtual camera may be adjusted through the operation on the direction control. The specific adjustment method is similar to that of embodiment 2, and details are not described here again.

Optionally, in other embodiments of the present application, the posture and position of the virtual camera may also be adjusted by the moving operation in the cover editing area. As an example, the rotation direction and the moving direction of the virtual camera are determined according to the moving direction corresponding to the moving operation, and the rotation direction and the moving direction of the virtual camera may be the same or different. For example, when the moving direction corresponding to the moving operation is up, down, left, or right, the rotation direction and the moving direction of the virtual camera are determined to be the X-axis, the negative X-axis, the Y-axis, and the negative Y-axis. Alternatively, when the moving direction corresponding to the moving operation is up, down, left, or right, the rotation direction of the virtual camera is determined to be the X-axis, the negative X-axis, the Y-axis, and the negative Y-axis, and the moving direction of the virtual camera is determined to be the Z-axis, the negative Z-axis, the X-axis, and the negative X-axis. The rotation angle and the moving distance of the virtual camera may be determined according to the moving distance corresponding to the moving operation, or may be fixed values.

Optionally, in other embodiments of the present application, the posture and position of the virtual camera may also be adjusted by the first operation on the direction control. As an example, the rotation direction and the moving direction of the virtual camera are determined according to the direction corresponding to the first operation, and the rotation direction and the moving direction of the virtual camera may be the same or different. For example, when the direction corresponding to the first operation is forward, backward, left, or right, the rotation direction and the moving direction of the virtual camera are determined to be the X-axis, the negative X-axis, the Y-axis, and the negative Y-axis. Or, when the direction corresponding to the first operation is forward, backward, left, or right, the rotation direction of the virtual camera is determined to be the X-axis, the negative X-axis, the Y-axis, and the negative Y-axis, and the moving direction of the virtual camera is determined to be the Z-axis, the negative Z-axis, the X-axis, and the negative X-axis. The rotation angle and the moving distance of the virtual camera may be determined according to the duration of the first operation, or may be fixed values.

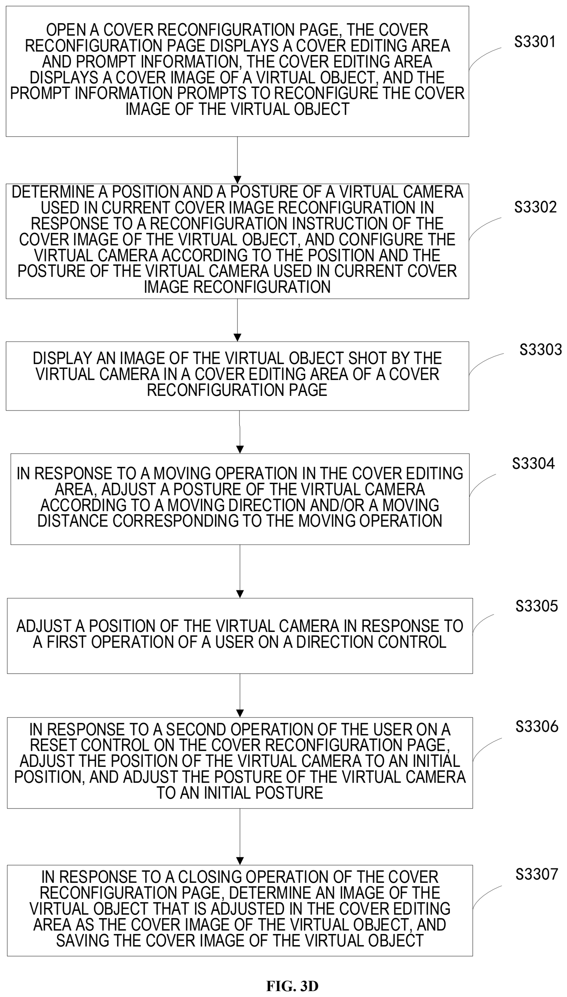

On the basis of embodiment 1 and embodiment 2, embodiment 3 of the present application provides a method for reconfiguring a cover image of a virtual object. For the same content, reference may be made to the description of Embodiment 1, and details are not described here again in this embodiment. FIG. 3D is a flowchart of a method for reconfiguring a cover image of a virtual object provided in embodiment 3 of the present application. As shown in FIG. 3D, the method provided in this embodiment includes the following steps.

At block S3301, a cover reconfiguration page is opened, the cover reconfiguration page displays a cover editing area and prompt information, the cover editing area displays a cover image of a virtual object, and the prompt information prompts to reconfigure the cover image of the virtual object.

The cover reconfiguration page may be a publication page of the virtual object, a saving page of the virtual object, or an introduction page of the virtual object, etc. In different scenarios, the user opens the cover reconfiguration page in different ways. It may be understood that the cover reconfiguration page may further include other content or controls.

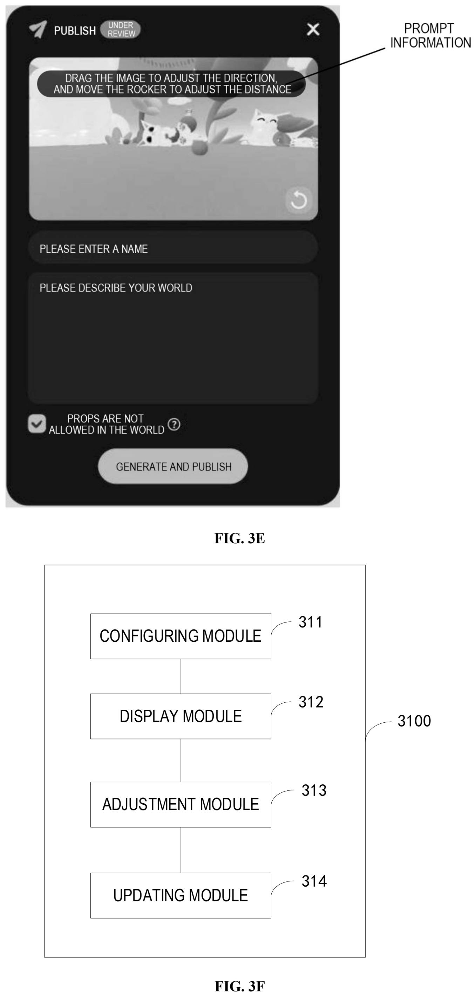

FIG. 3E is a schematic diagram of a further publication page of a virtual scene. As shown in FIG. 3E, the following prompt information is displayed in the cover editing area: Drag the image to adjust the direction, and move the rocker to adjust the distance. The adjusting the direction is the adjusting the posture of the virtual camera as described in the embodiments of the present application, and the adjusting the distance is the adjusting the position of the virtual camera as described in the embodiments of the present application.

It may be understood that the prompt information is not limited to a text form, and may also be a form of text combined with pictures, or text combined with special effects.

In the embodiments of the present application, the prompt information may be displayed every time the user opens the cover reconfiguration page, or the prompt information may be displayed before the user reconfigures for the first time. After detecting that the user has reconfigured the cover, the prompt information is not displayed when the user opens the cover reconfiguration page again.

The prompt information may disappear after a predetermined time period. For example, the prompt information is displayed by default for 2 seconds, and the prompt information disappears after 2 seconds. Alternatively, the prompt information is hidden on the cover reconfiguration page in response to a cancel instruction. The cancel instruction may be input by the user by pressing a trigger key of the handle, or may be input by pressing down the rocker for 0.5s.

At block S3302, a position and a posture of a virtual camera used in current cover image reconfiguration are determined in response to a reconfiguration instruction of the cover image of the virtual object, and the virtual camera is configured according to the position and the posture of the virtual camera used in current cover image reconfiguration.

Optionally, a reconfiguration control is displayed on the cover reconfiguration page, and the reconfiguration instruction is input by pressing the reset control.

If the cover image of the virtual object has been configured before, a position and a posture of the virtual camera when the cover image of the virtual object was latest reconfigured is determined as the position and the posture used in current cover image reconfiguration. In this way, after each time the cover image of the virtual object is reconfigured, the position and the posture of the virtual camera need to be recorded, and the position and the posture of the virtual camera refer to the position and the posture of the virtual camera relative to the virtual object.

If the cover image of the virtual object has not been configured before, an initial position and an initial posture of the virtual camera is determined as the position and the posture used in current cover image reconfiguration. The initial position and the initial posture of the virtual camera are predetermined or provided by the system.

At block S3303, an image of the virtual object shot by the virtual camera is displayed in a cover editing area of a cover reconfiguration page.

When the virtual object is a prop or a material, the virtual camera is configured at a certain distance from the prop or the material, and the prop or the material is shot by the virtual camera. When the virtual object is a virtual scene, the virtual object is configured in the virtual scene, and the virtual elements in the virtual scene are shot by the virtual camera. With the movement of the position of the virtual camera, the image in the virtual scene is constantly changing, and the virtual elements shot by the virtual camera are also constantly changing.

At block S3304, a posture of the virtual camera is adjusted in response to a moving operation in the cover editing area.

At block S3305, a position of the virtual camera is adjusted in response to a first operation of the user on a direction control of the controller.

At block S3306, the position of the virtual camera is adjusted to an initial position and the posture of the virtual camera is adjusted to an initial posture in response to a second operation of the user on a reset control on the cover reconfiguration page.

It should be noted that steps S3304, S3305 and S3306 have no sequence in execution, and are performed according to the operations of the user. In one adjustment process, the user may only adjust the posture of the virtual camera, or may only adjust the position of the virtual camera, or may adjust both the posture and the position of the virtual camera.

At block S3307, an image of the virtual object that is adjusted in the cover editing area is determined as the cover image of the virtual object and the cover image of the virtual object is saved in response to a closing operation of the cover reconfiguration page.

In order to better implement the method for reconfiguring a cover image of a virtual object in the embodiments of the present application, the embodiments of the present application further provide an apparatus for reconfiguring a cover image of a virtual object. FIG. 3F is a schematic structural diagram of an apparatus for reconfiguring a cover image of a virtual object provided in Embodiment 4 of the present application. As shown in FIG. 3F, the apparatus 3100 for reconfiguring a cover image of a virtual object may include:

a configuring module 311, configured to set a virtual camera in response to a reconfiguration instruction of the cover image of a virtual object for shooting the virtual object;

a display module 312, configured to display an image of the virtual object shot by the virtual camera in a cover editing area of a cover reconfiguration page;

an adjustment module 313, configured to adjust a position and/or a posture of the virtual camera in response to an adjustment instruction of the user; and

an updating module 314, configured to update an image of the virtual object that is adjusted in the cover editing area to the cover image of the virtual object.

In some embodiments, the adjustment module 313 is further configured to:

adjust the position and and/or the posture of the virtual camera in response to a moving operation in the cover editing area.

In some embodiments, the adjustment module 313 is further configured to:

adjust the posture of the virtual camera according to a moving direction and/or a moving distance corresponding to a moving operation in the cover editing area in response to the moving operation in the cover editing area.

In some embodiments, the adjustment module 313 is further configured to: determine a rotation direction of the virtual camera according to the moving direction corresponding to the moving operation; and control the virtual camera to rotate in the rotation direction.

In some embodiments, the adjustment module 313 is further configured to: determine the rotation directions of the virtual camera to be the X-axis, the negative X-axis, the Y-axis, and the negative Y-axis in sequence when the moving direction corresponding to the moving operation is up, down, left, or right.

In some embodiments, the adjustment module 313 is further configured to: determine a rotation angle of the virtual camera according to the moving distance corresponding to the moving operation; and control the virtual camera to rotate according to the rotation angle.

In some embodiments, the moving distance corresponding to the moving operation is the number of pixels moved, and the adjustment module 313 is further configured to: determine the rotation angle of the virtual camera to be M*N when the number of pixels moved corresponding to the moving operation is M, where N is an integer greater than or equal to 1.

In some embodiments, the adjustment module 313 is further configured to:

adjust the position and/or the posture of the virtual camera in response to a first operation of the user on the direction control.

In some embodiments, the direction control is a virtual direction control displayed on the cover reconfiguration page, or a physical direction control on the controller of the XR device.

In some embodiments, the adjustment module 313 is further configured to: determine a target moving direction of the virtual camera according to a direction corresponding to the first operation of the user on the direction control in response to the first operation of the user on the direction control; and control the virtual camera to move in the target moving direction.

In some embodiments, the adjustment module 313 is further configured to: determine the target moving directions of the virtual camera to be the Z-axis, the negative Z-axis, the X-axis, and the negative X-axis in sequence when the direction corresponding to the first operation is forward, backward, left, or right.

In some embodiments, the adjustment module 313 is further configured to: control the virtual camera to move in the target moving direction according to a predetermined moving speed or a predetermined moving distance.

In some embodiments, the adjustment module 313 is further configured to:

adjust the posture of the virtual camera in response to a moving operation in the cover editing area; and adjust the position of the virtual camera in response to a first operation of the user on the direction control of the controller.

In some embodiments, the configuring module 311 is further configured to:

determine that the virtual object is not rendered in response to the reconfiguration instruction of the cover image of the virtual object, and acquire a byte sequence corresponding to the virtual object; and deserialize the byte sequence corresponding to the virtual object to form the virtual object, and set a virtual camera for the virtual object.

In some embodiments, prompt information is displayed on the cover reconfiguration page, and the prompt information prompts to reconfigure the cover image of the virtual object.

In some embodiments, the apparatus further includes:

a hiding module, configured to hide the prompt information on the cover reconfiguration page in response to a cancel instruction.

In some embodiments, a reset control is further displayed on the cover reconfiguration page, and the adjustment module 13 is further configured to: adjust the position of the virtual camera to an initial position in response to a second operation of the user on the reset control.

In some embodiments, the configuring module 311 is further configured to:

determine a position and a posture of the virtual camera used in a current cover image reconfiguration; and

configure the virtual camera according to the position and the posture of the virtual camera used in the current cover image reconfiguration.

In some embodiments, the configuring module 311 is further configured to: if the cover image of the virtual object has been configured before, determine a position and a posture of the virtual camera when the cover image of the virtual object was latest reconfigured as the position and the posture used in the current cover image reconfiguration.

In some embodiments, the configuring module 311 is further configured to: if the cover image of the virtual object has not been configured before, determine an initial position and an initial posture of the virtual camera as the position and the posture used in the current cover image reconfiguration.

In some embodiments, the configuring module 311 is further configured to: configure the virtual camera according to an initial position and an initial posture of the virtual camera when the cover image of the virtual object is shot for the first time; and shoot the virtual object according to the initial position and the initial posture of the virtual camera.

The updating module 314 is further configured to: generate the cover image corresponding to the virtual object according to the image of the virtual object shot by the virtual camera.

In some embodiments, a background of the image shot by the virtual camera is transparent.

In some embodiments, when the virtual camera shoots the virtual object, a part of virtual elements need to be shot in the virtual object are rendered, and other virtual elements are not rendered.

In some embodiments, the virtual object is a virtual scene, and the configuring module 311 is further configured to:

configure the virtual camera in the virtual scene in response to the reconfiguration instruction of the cover image of the virtual object.

It should be understood that the apparatus embodiments and the method embodiments may correspond to each other, and reference may be made to the method embodiments for similar descriptions. To avoid repetition, details are not described here again.

The apparatus 3100 of the embodiments of the present application is described above from the perspective of functional modules in conjunction with the drawings. It should be understood that the functional modules may be implemented in a hardware form, may also be implemented by instructions in a software form, and may also be implemented by a combination of hardware and software modules. Specifically, each step of the method embodiments in the embodiments of the present application may be completed by an integrated logic circuit of hardware in a processor and/or instructions in a software form, and the steps of the method disclosed in the embodiments of the present application may be directly embodied as being executed and completed by a hardware decoder processor, or executed and completed by a combination of hardware and software modules in a decoder processor. Optionally, the software module may be located in a mature storage medium in the art such as a random access memory, a flash memory, a read-only memory, a programmable read-only memory, an electrically erasable programmable memory, and a register. The storage medium is located in the memory, and the processor reads information in the memory and completes the steps in the above method embodiments in combination with its hardware.

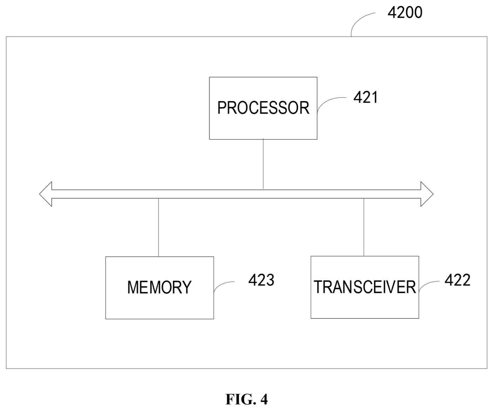

The embodiments of the present application further provide an electronic device. FIG. 4 is a schematic structural diagram of an electronic device 4200 provided in multiple embodiments of the present application. The electronic device 4200 may be configured to implement the XR device, the electronic device, and the like in the above embodiments. As shown in FIG. 4, the electronic device 4200 may include:

a memory 423 and a processor 421, where the memory 423 is configured to store a computer program and transmit the program code to the processor 421. In other words, the processor 421 may call and run the computer program from the memory 423 to implement the methods in the embodiments of the present application.

For example, the processor 421 may be configured to execute the above-mentioned method embodiments according to instructions in the computer program.

In some embodiments of the present application, the processor 421 may include but not limited to: a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic device, a discrete gate or transistor logic device, a discrete hardware component, and the like.

In some embodiments of the present application, the memory 423 includes but not limited to: volatile memory and/or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), which is used as an external cache. By way of exemplary but not limiting illustration, many forms of RAM are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDR SDRAM), enhanced synchronous dynamic random access memory (Enhanced SDRAM, ESDRAM), synchronous link dynamic random access memory (synch link DRAM, SLDRAM) and direct ram bus random access memory (Direct Rambus RAM, DR RAM).

In some embodiments of the present application, the computer program may be divided into one or more modules, and the one or more modules are stored in the memory 423 and executed by the processor 421 to complete the methods provided in the present application. The one or more modules may be a series of computer program instruction segments that may complete a specific function, and the instruction segments are configured to describe an execution process of the computer program in the XR device.

As shown in FIG. 4, the XR device may further include: a transceiver 422, and the transceiver 422 may be connected to the processor 421 or the memory 423.

The processor 421 may control the transceiver 422 to communicate with other devices. Specifically, information or data may be sent to other devices, or information or data sent by other devices may be received. The transceiver 422 may include a transmitter and a receiver. The transceiver 422 may further include an antenna, and the number of antennas may be one or more.

It may be understood that although not shown in FIG. 4, the XR device 4200 may further include a camera module, a wireless fidelity (WIFI) module, a positioning module, a Bluetooth module, a display, a controller, and the like, which will not be repeated here.

It should be understood that various components in the XR device are connected through a bus system, and the bus system includes a power bus, a control bus, and a status signal bus in addition to a data bus.

The present application further provides a computer storage medium having a computer program stored thereon, which, when executed by a computer, causes the computer to perform the methods of the above method embodiments. In other words, the embodiments of the present application further provide a computer program product including instructions, which, when executed by a computer, cause the computer to perform the methods of the above method embodiments.

The present application further provides a computer program product, which includes a computer program, and the computer program is stored in a computer-readable storage medium. A processor of the XR device/electronic device reads the computer program from the computer-readable storage medium, and the processor executes the computer program, causing the XR device/electronic device to perform corresponding processes of the method for controlling a user position in a virtual object in the embodiments of the present application. For the sake of brevity, details are not repeated here.

In the several embodiments provided in the present application, it should be understood that the disclosed systems, apparatuses and methods may be implemented in other ways. For example, the above-described apparatus embodiments are only schematic, for example, the division of the module is only a logical function division, and there may be other division ways in actual implementation, for example, multiple modules or components may be combined or integrated into another system, or some features may be ignored, or not implemented. In another point, the mutual coupling or direct coupling or communication connection displayed or discussed may be through some interfaces, and the indirect coupling or communication connection of the devices or modules may be electrical, mechanical or other forms.

The modules described as separate components may be or may not be physically separated, and the components displayed as modules may be or may not be physical modules, that is, they may be located in one place, or may be distributed to multiple network units. Some or all of the modules may be selected according to actual needs to achieve the purpose of the solutions of the embodiments. For example, the functional modules in the embodiments of the present application may be integrated into a processing module, or the modules may exist physically separately, or two or more modules may be integrated into one module.

The above is only specific embodiments of the present application, but the protection scope of the present application is not limited to this, and any person skilled in the art may easily think of changes or replacements within the technical scope disclosed in the present application, which should be covered by the protection scope of the present application. Therefore, the protection scope of the present application should be subject to the protection scope of the claims.

**Claims**

1. A method for generating a cover image of a virtual object, comprising:

   receiving a generation instruction of the cover image of the virtual object;
   determining a position of a virtual camera for shooting the virtual object;
   shooting the virtual object according to the position of the virtual camera; and
   generating the cover image corresponding to the virtual object according to an image of the virtual object shot by the virtual camera.

2. The method according to claim 1, wherein determining the position of the virtual camera comprises:
   determining a target distance between the virtual camera and a center point of the virtual object according to a size of the virtual object.

3. The method according to claim 2, wherein determining the target distance between the virtual camera and the center point of the virtual object according to the size of the virtual object comprises:
   determining the target distance according to a size of a bounding box of the virtual object.

4. The method according to claim 3, wherein determining the target distance according to the size of the bounding box of the virtual object comprises:
   determining the target distance according to a maximum size of the bounding box of the virtual object, wherein bounding box of the virtual object has a plurality of sizes.

5. The method according to claim 3, wherein determining the target distance according to the size of the bounding box of the virtual object comprises:

   determining the target distance D by a formula:

   $$D=k*(L+W+H);$$

   wherein L, W, and H are a length, a width, and a height of a cuboid bounding box of the virtual object, respectively.

6. The method according to any of claims 2 to 5, wherein virtual camera is located in a predetermined direction of the virtual object.

7. The method according to any of claims 2 to 4, wherein the virtual camera is located in a direction perpendicular to a direction where a maximum size of the bounding box of the virtual object is located, and the bounding box of the virtual object has a plurality of sizes.

8. The method according to any of claims 1 to 5, wherein a background of the image shot by the virtual camera is transparent.

9. The method according to any of claims 1 to 5, wherein when the virtual object is shot, the virtual object is rendered, and other objects outside the virtual object are not rendered.

10. The method according to any of claims 2 to 5, wherein before shooting the virtual object according to the position of the virtual camera, the method further comprises:
    adjusting a field of view of the virtual camera and/or a distance of a clipping plane of the virtual camera according to the target distance between the virtual camera and the center point of the virtual object, wherein the field of view of the virtual camera is negatively correlated with the target distance, and a nearest distance of the clipping plane of the virtual camera is positively correlated with the target distance.

11. The method according to any of claims 1 to 5, wherein the virtual object is a user-defined virtual object, and the generation instruction is a saving instruction of the virtual object.

12. The method according to any of claims 1 to 5, wherein the virtual object is a user-defined virtual object, the generation instruction is a publishing instruction of the virtual object, and the publishing instruction is configured to publish the virtual object to a specified platform.

13. An apparatus for generating a cover image of a virtual object, comprising:

    a receiving module, configured to receive a generation instruction of the cover image of the virtual object;
    a determination module, configured to determine a position of a virtual camera for shooting the virtual object;
    a shooting module, configured to shoot the virtual object according to the position of the virtual camera; and

a generation module, configured to generate the cover image corresponding to the virtual object according to an image of the virtual object shot by the virtual camera.

14. An electronic device, comprising:
a processor and a memory, wherein the memory is configured to store a computer program, and the processor is configured to invoke and run the computer program stored in the memory to perform the method according to any of claims 1 to 12.

15. A computer-readable storage medium, configured to store a computer program, wherein the computer program causes a computer to perform the method according to any of claims 1 to 12.

16. A computer program product, comprising a computer program, wherein when the computer program is executed by a processor, the method according to any of claims 1 to 12 is implemented.

17. A method for reconfiguring a cover image of a virtual object, comprising:

in response to a reconfiguration instruction for the cover image of the virtual object, deserializing a byte sequence corresponding to a cover image of a virtual object to form the virtual object; configuring, in a virtual shooting space, the virtual object and a virtual camera for shooting the virtual object; displaying, in a cover editing area, an image of the virtual object shot by the virtual camera; in response to a first operation of a user, adjusting a target parameter of the virtual object in the virtual shooting space, the target parameter comprising at least one of: a position, a size, or a posture; and updating the image of the virtual object that is adjusted in the cover editing area to the cover image of the virtual object.

18. The method according to claim 17, wherein adjusting the target parameter of the virtual object in the virtual shooting space in response to the first operation of the user comprises:
in response to a moving operation in the cover editing area, adjusting a posture of the virtual object in the virtual shooting space according to a moving direction and/or a moving distance corresponding to the moving operation.

19. The method according to claim 18, wherein adjusting the posture of the virtual object in the virtual shooting space according to the moving direction corresponding to the moving operation comprises:

determining a rotation direction of the virtual object according to the moving direction corresponding to the moving operation; and controlling the virtual object in the virtual shooting space to rotate in the rotation direction.

20. The method according to claim 19, wherein determining the rotation direction of the virtual object according to the moving direction corresponding to the moving operation comprises:
determining that the rotation direction of the virtual object is an X-axis, a negative X-axis, a Y-axis, and a negative Y-axis in sequence when the moving direction corresponding to the moving operation is up, down, left, or right.

21. The method according to claim 18, wherein adjusting the posture of the virtual object in the virtual shooting space according to the moving distance corresponding to the moving operation comprises:

determining a rotation angle of the virtual object according to the moving distance corresponding to the moving operation; and controlling the virtual object in the virtual shooting space to rotate according to the rotation angle.

22. The method according to claim 21, wherein the moving distance corresponding to the moving operation is a number of pixels moved, and determining the rotation angle of the virtual object according to the moving distance corresponding to the moving operation comprises:
determining that the rotation angle of the virtual object is M*N when the number of pixels moved corresponding to the moving operation is M, N being an integer greater than or equal to 1.

23. The method according to claim 17, wherein a closer an operation position corresponding to the first operation is to the cover editing area, a smaller the size of the virtual object is and/or a farther the position of the virtual object is.

24. The method according to claim 17, wherein adjusting the target parameter of the virtual object in the virtual shooting space in response to the first operation of the user comprises:

controlling the image of the virtual object to be in an editing state in response to detecting a second operation on the image of the virtual object; and adjusting a size of the virtual object in the virtual shooting space in response to an adjustment operation of the user on a size of the image of the virtual object in the editing state.

**25.** The method according to claim 17, wherein adjusting the target parameter of the virtual object in the virtual shooting space in response to the first operation of the user comprises:

controlling an image of the virtual object to be in a moveable state in response to detecting a third operation on the image of the virtual object; and adjusting a position of the virtual object in the virtual shooting space in response to a drag operation of the user on the image of the virtual object.

**26.** The method according to any of claims 17 to 25, wherein a background of the image shot by the virtual camera is transparent.

**27.** The method according to any of claims 17 to 25, wherein when the virtual object is shot, the virtual object is rendered, and other objects outside the virtual object are not rendered.

**28.** The method according to any of claims 17 to 25, wherein before the virtual object and the virtual camera are configured in the virtual shooting space, the method further comprises:

determining a position of the virtual camera used in a current cover image reconfiguration; and wherein configuring the virtual object and the virtual camera in the virtual shooting space comprises:
configuring the virtual object and the virtual camera in the virtual shooting space according to the position of the virtual camera used in the current cover image reconfiguration.

**29.** The method according to claim 28, wherein determining the position of the virtual camera used in the current cover image reconfiguration comprises:
determining a position of the virtual camera when the cover image of the virtual object was latest reconfigured as the position of the virtual camera used in the current cover image reconfiguration, if the cover image of the virtual object has been configured before.

**30.** The method according to claim 28, wherein determining the position of the virtual camera used in the current cover image reconfiguration comprises:
determining a default position of the virtual camera as the position of the virtual camera used in the current cover image reconfiguration, if the cover image of the virtual object has not been configured before.

**31.** The method according to claim 30, wherein the default position of the virtual camera comprises a target distance between the virtual camera and the center point of the virtual object, and the method further comprises:
determining the target distance between the virtual camera and the center point of the virtual object according to a size of the virtual object.

**32.** The method according to claim 31, wherein determining the target distance between the virtual camera and the center point of the virtual object according to the size of the virtual object comprises:
determining the target distance according to a size of a bounding box of the virtual object.

**33.** An apparatus for reconfiguring a cover image of a virtual object, comprising:

a deserialization module, configured to deserialize a byte sequence corresponding to the cover image of the virtual object to form the virtual object in response to a reconfiguration instruction of the cover image of the virtual object;
a configuring module, configured to configure the virtual object and a virtual camera in a virtual shooting space for shooting the virtual object;
a display module, configured to display, in a cover editing area, an image of the virtual object shot by the virtual camera;
an adjustment module, configured to adjust a target parameter of the virtual object in the virtual shooting space in response to a first operation of a user, the target parameter comprising at least one of : a position, a size, or a posture; and
an updating module, configured to update the image of the virtual object that is adjusted in the cover editing area to the cover image of the virtual object.

**34.** An electronic device, comprising:
a processor and a memory, wherein the memory is configured to store a computer program, and the processor is configured to invoke and run the computer program stored in the memory to perform the method according to any of claims 17 to 32.

**35.** A computer-readable storage medium, configured to store a computer program, wherein the computer program causes a computer to perform the method according to any of claims 17 to 32.

**36.** A computer program product, comprising a computer program, wherein when the computer program is executed by a processor, the method according to any of claims 17 to 32 is implemented.

**37.** A method for reconfiguring a cover image of a virtual object, comprising:

in response to a reconfiguration instruction for the cover image of the virtual object, configuring a virtual camera for shooting the virtual object;
displaying an image of the virtual object shot by the virtual camera in a cover editing area of a cover reconfiguration page;
adjusting a position and/or a posture of the virtual camera in response to an adjustment instruction of a user; and
updating the image of the virtual object that is adjusted in the cover editing area to the cover image of the virtual object.

38. The method according to claim 37, wherein adjusting the position and/or the posture of the virtual camera in response to the adjustment instruction of the user comprises:
adjusting the position and/or the posture of the virtual camera in response to a moving operation in the cover editing area.

39. The method according to claim 38, wherein adjusting the position and/or the posture of the virtual camera in response to the moving operation in the cover editing area comprises:
in response to a moving operation in the cover editing area, adjusting a posture of the virtual camera according to a moving direction and/or a moving distance corresponding to the moving operation.

40. The method according to claim 39, wherein adjusting the posture of the virtual camera according to the moving direction and/or the moving distance corresponding to the moving operation comprises:

determining a rotation direction of the virtual camera according to the moving direction corresponding to the moving operation; and
controlling the virtual camera to rotate in the rotation direction.

41. The method according to claim 40, wherein determining the rotation direction of the virtual camera according to the moving direction corresponding to the moving operation comprises:
determining that the rotation direction of the virtual camera is an X-axis, a negative X-axis, a Y-axis, and a negative Y-axis in sequence when the moving direction corresponding to the moving operation is up, down, left, or right.

42. The method according to claim 39, wherein adjusting the posture of the virtual camera according to the moving direction and/or the moving distance corresponding to the moving operation comprises:

determining a rotation angle of the virtual camera according to the moving distance corresponding to the moving operation; and
controlling the virtual camera to rotate according to the rotation angle.

43. The method according to claim 42, wherein moving distance corresponding to the moving operation is a number of pixels moved, and determining the rotation angle of the virtual camera according to the moving distance corresponding to the moving operation comprises:
determining that the rotation angle of the virtual camera is $M*N$ when the number of pixels moved corresponding to the moving operation is M, N being an integer greater than or equal to 1.

44. The method according to claim 37, wherein adjusting the position and/or the posture of the virtual camera in response to the adjustment instruction of the user comprises:
adjusting the position and/or the posture of the virtual camera in response to a first operation of the user on a direction control.

45. The method according to claim 44, wherein the direction control is a virtual direction control displayed on the cover reconfiguration page or a physical direction control on a controller of an extended reality device.

46. The method according to claim 44, wherein adjusting the position and/or the posture of the virtual camera in response to the first operation of the user on the direction control comprises:

determining a target moving direction of the virtual camera according to a direction corresponding to the first operation in response to the first operation of the user on the direction control; and
controlling the virtual camera to move in the target moving direction.

47. The method according to claim 46, wherein determining the target moving direction of the virtual camera according to the direction corresponding to the first operation comprises:
determining that the target moving direction of the virtual camera is a Z-axis, a negative Z-axis, an X-axis, and a negative X-axis in sequence when the direction corresponding to the first operation is forward, backward, left, or right.

48. The method according to claim 46, wherein controlling the virtual camera to move in the target moving direction comprises:
controlling the virtual camera to move in the target moving direction according to a predetermined moving speed or a predetermined moving distance.

49. The method according to claim 37, wherein adjusting the position and/or the posture of the virtual camera in response to the adjustment instruction of the user comprises:

adjusting the posture of the virtual camera in response to a moving operation in the cover editing area; and
adjusting the position of the virtual camera in response to a first operation of the user on a direction control on a controller.

50. The method according to any of claims 37 to 49, wherein configuring the virtual camera in the virtual object in response to the reconfiguration instruction of the cover image of the virtual object comprises:

determining that the virtual object is not rendered in response to the reconfiguration instruction of the cover image of the virtual object, and acquiring a byte sequence corresponding to the virtual object; and
deserializing the byte sequence corresponding to the virtual object to form the virtual object, and configuring the virtual camera for the virtual object.

51. The method according to any of claims 37 to 49, wherein prompt information is displayed on the cover reconfiguration page, and the prompt information prompts to configure the cover image of the virtual object.

52. The method according to claim 51, further comprising:
hiding the prompt information on the cover reconfiguration page in response to a cancel instruction.

53. The method according to any of claims 37 to 49, **characterized in that** a reset control is further displayed on the cover reconfiguration page, and adjusting the position and/or the posture of the virtual camera in response to the adjustment instruction of the user comprises:
adjusting the position of the virtual camera to an initial position in response to a second operation of the user on the reset control.

54. The method according to any of claims 37 to 49, **characterized in that** before the virtual camera is configured, the method further comprises:

determining a position and a posture of the virtual camera used in a current cover image reconfiguration; and
wherein configuring the virtual camera comprises:
configuring the virtual camera according to the position and the posture of the virtual camera used in the current cover image reconfiguration.

55. The method according to claim 54, **characterized in that** determining the position and the posture of the virtual camera used in the current cover image reconfiguration comprises:
determining a position and a posture of the virtual camera when the cover image of the virtual object was latest reconfigured as the position and the posture of the virtual camera used in the current cover image reconfiguration, if the cover image of the virtual object has been configured before.

56. The method according to claim 54, **characterized in that** determining the position of the virtual camera used in the current cover image reconfiguration comprises:
determining an initial position and an initial posture of the virtual camera as the position and the posture of the virtual camera used in the current cover image reconfiguration, if the cover image of the virtual object has not been configured before.

57. The method according to any of claims 37-49, wherein method further comprises:

configuring the virtual camera according to an initial position and an initial posture of the virtual camera when the cover image of the virtual object is shot for a first time;
shooting the virtual object according to the initial position and the initial posture of the virtual camera; and
generating the cover image corresponding to the virtual object according to the image of the virtual object shot by the virtual camera.

58. The method according to any of claims 37-49, wherein a background of the image shot by the virtual camera is transparent.

59. The method according to any of claims 37-49, wherein when the virtual object is shot, a part of virtual elements need to be shot in the virtual object is rendered, and other virtual elements are not rendered.

60. The method according to any of claims 37-49, wherein virtual object is a virtual scene, and configuring the virtual camera in response to the reconfiguration instruction of the cover image of the virtual object comprises:
configuring the virtual camera in the virtual scene in response to the reconfiguration instruction of the cover image of the virtual object.

61. An apparatus for reconfiguring a cover image of a virtual object, comprising:

a configuring module, configured to configure a virtual camera in response to a reconfiguration instruction of the cover image of the virtual object for shooting the virtual object;
a display module, configured to display an image of the virtual object shot by the virtual camera in a cover editing area of a cover reconfiguration page;
an adjustment module, configured to adjust a position and/or a posture of the virtual camera in response to an adjustment instruction of a user; and
an updating module, configured to update the image of the virtual object that is adjusted in the cover editing area to the cover image of the virtual object.

62. An XR device, comprising:
a processor and a memory, wherein the memory is configured to store a computer program, and the processor is configured to invoke and run the computer program stored in the memory to perform the method according to any of claims 37 to 60.

63. A computer-readable storage medium, configured to store a computer program, wherein the computer program causes a computer to perform the method according to any of claims 37 to 60.

64. A computer program product, comprising a computer program, wherein when the computer program is executed by a processor, the method according to any of claims 37 to 60 is implemented.

RECEIVE A GENERATION INSTRUCTION OF THE COVER IMAGE OF THE VIRTUAL OBJECT — S1101

DETERMINE A POSITION OF A VIRTUAL CAMERA FOR SHOOTING THE VIRTUAL OBJECT — S1102

SHOOT THE VIRTUAL OBJECT ACCORDING TO THE POSITION OF THE VIRTUAL CAMERA — S1103

GENERATE THE COVER IMAGE CORRESPONDING TO THE VIRTUAL OBJECT ACCORDING TO AN IMAGE OF THE VIRTUAL OBJECT SHOT BY THE VIRTUAL CAMERA — S1104

**FIG. 1A**

**FIG. 1B**

NEAREST DISTANCE OF THE CLIPPING PLANE

FARTHEST DISTANCE OF THE CLIPPING PLANE

Horizontal Field of View

Vertical Field of View

fov

POSITION OF CAMERA

**FIG. 1C**

RECEIVING MODULE — 111

DETERMINATION MODULE — 112

SHOOTING MODULE — 113

GENERATION MODULE — 114

1100

**FIG. 1D**

IN RESPONSE TO A RECONFIGURATION INSTRUCTION FOR THE COVER IMAGE OF THE VIRTUAL OBJECT, DESERIALIZE A BYTE SEQUENCE CORRESPONDING TO A COVER IMAGE OF A VIRTUAL OBJECT TO FORM THE VIRTUAL OBJECT — S2101

CONFIGURE, IN A VIRTUAL SHOOTING SPACE, THE VIRTUAL OBJECT AND A VIRTUAL CAMERA FOR SHOOTING THE VIRTUAL OBJECT — S2102

DISPLAY, IN A COVER EDITING AREA, AN IMAGE OF THE VIRTUAL OBJECT SHOT BY THE VIRTUAL CAMERA — S2103

IN RESPONSE TO A FIRST OPERATION OF A USER, ADJUST A TARGET PARAMETER OF THE VIRTUAL OBJECT IN THE VIRTUAL SHOOTING SPACE, THE TARGET PARAMETER COMPRISING AT LEAST ONE OF: A POSITION, A SIZE, OR A POSTURE — S2104

UPDATE THE IMAGE OF THE VIRTUAL OBJECT THAT IS ADJUSTED IN THE COVER EDITING AREA TO THE COVER IMAGE OF THE VIRTUAL OBJECT — S2105

**FIG. 2A**

**FIG. 2B**

**FIG. 2C**

**FIG. 2D**

**FIG. 2E**

IN RESPONSE TO A RECONFIGURATION INSTRUCTION FOR THE COVER IMAGE OF THE VIRTUAL OBJECT, DESERIALIZE A BYTE SEQUENCE CORRESPONDING TO A COVER IMAGE OF A VIRTUAL OBJECT TO FORM THE VIRTUAL OBJECT — S2201

DETERMINE A POSITION OF THE VIRTUAL CAMERA USED IN A CURRENT COVER IMAGE RECONFIGURATION, THE VIRTUAL CAMERA IS CONFIGURED TO SHOOT THE VIRTUAL OBJECT — S2202

CONFIGURE THE VIRTUAL OBJECT AND THE VIRTUAL CAMERA IN THE VIRTUAL SHOOTING SPACE ACCORDING TO THE POSITION OF THE VIRTUAL CAMERA USED IN THE CURRENT COVER IMAGE RECONFIGURATION — S2203

DISPLAY, IN A COVER EDITING AREA, AN IMAGE OF THE VIRTUAL OBJECT SHOT BY THE VIRTUAL CAMERA — S2204

IN RESPONSE TO A FIRST OPERATION OF A USER, ADJUST A TARGET PARAMETER OF THE VIRTUAL OBJECT IN THE VIRTUAL SHOOTING SPACE, THE TARGET PARAMETER COMPRISING AT LEAST ONE OF: A POSITION, A SIZE, OR A POSTURE — S2205

UPDATE THE IMAGE OF THE VIRTUAL OBJECT THAT IS ADJUSTED IN THE COVER EDITING AREA TO THE COVER IMAGE OF THE VIRTUAL OBJECT — S2206

**FIG. 2F**

**FIG. 2G**

**FIG. 2H**

DESERIALIZATION MODULE — 211

CONFIGURING MODULE — 212

2100

DISPLAY MODULE — 213

ADJUSTMENT MODULE — 214

UPDATING MODULE — 215

**FIG. 2I**

IN RESPONSE TO A RECONFIGURATION INSTRUCTION FOR THE COVER IMAGE OF THE VIRTUAL OBJECT, CONFIGURE A VIRTUAL CAMERA FOR SHOOTING THE VIRTUAL OBJECT — S3101

DISPLAY AN IMAGE OF THE VIRTUAL OBJECT SHOT BY THE VIRTUAL CAMERA IN A COVER EDITING AREA OF A COVER RECONFIGURATION PAGE — S3102

ADJUST A POSITION AND/OR A POSTURE OF THE VIRTUAL CAMERA IN RESPONSE TO AN ADJUSTMENT INSTRUCTION OF A USER — S3103

UPDATE THE IMAGE OF THE VIRTUAL OBJECT THAT IS ADJUSTED IN THE COVER EDITING AREA TO THE COVER IMAGE OF THE VIRTUAL OBJECT — S3104

**FIG. 3A**

**FIG. 3B**

IN RESPONSE TO A RECONFIGURATION INSTRUCTION FOR THE COVER IMAGE OF THE VIRTUAL OBJECT, CONFIGURE A VIRTUAL CAMERA FOR SHOOTING THE VIRTUAL OBJECT — S3201

DISPLAY AN IMAGE OF THE VIRTUAL OBJECT SHOT BY THE VIRTUAL CAMERA IN A COVER EDITING AREA OF A COVER RECONFIGURATION PAGE — S3202

IN RESPONSE TO A MOVING OPERATION IN THE COVER EDITING AREA, ADJUST A POSTURE OF THE VIRTUAL CAMERA ACCORDING TO A MOVING DIRECTION AND/OR A MOVING DISTANCE CORRESPONDING TO THE MOVING OPERATION — S3203

ADJUST A POSITION OF THE VIRTUAL CAMERA IN RESPONSE TO A FIRST OPERATION OF A USER ON A DIRECTION CONTROL — S3204

UPDATE THE IMAGE OF THE VIRTUAL OBJECT THAT IS ADJUSTED IN THE COVER EDITING AREA TO THE COVER IMAGE OF THE VIRTUAL OBJECT — S3205

**FIG. 3C**

OPEN A COVER RECONFIGURATION PAGE, THE COVER RECONFIGURATION PAGE DISPLAYS A COVER EDITING AREA AND PROMPT INFORMATION, THE COVER EDITING AREA DISPLAYS A COVER IMAGE OF A VIRTUAL OBJECT, AND THE PROMPT INFORMATION PROMPTS TO RECONFIGURE THE COVER IMAGE OF THE VIRTUAL OBJECT — S3301

DETERMINE A POSITION AND A POSTURE OF A VIRTUAL CAMERA USED IN CURRENT COVER IMAGE RECONFIGURATION IN RESPONSE TO A RECONFIGURATION INSTRUCTION OF THE COVER IMAGE OF THE VIRTUAL OBJECT, AND CONFIGURE THE VIRTUAL CAMERA ACCORDING TO THE POSITION AND THE POSTURE OF THE VIRTUAL CAMERA USED IN CURRENT COVER IMAGE RECONFIGURATION — S3302

DISPLAY AN IMAGE OF THE VIRTUAL OBJECT SHOT BY THE VIRTUAL CAMERA IN A COVER EDITING AREA OF A COVER RECONFIGURATION PAGE — S3303

IN RESPONSE TO A MOVING OPERATION IN THE COVER EDITING AREA, ADJUST A POSTURE OF THE VIRTUAL CAMERA ACCORDING TO A MOVING DIRECTION AND/OR A MOVING DISTANCE CORRESPONDING TO THE MOVING OPERATION — S3304

ADJUST A POSITION OF THE VIRTUAL CAMERA IN RESPONSE TO A FIRST OPERATION OF A USER ON A DIRECTION CONTROL — S3305

IN RESPONSE TO A SECOND OPERATION OF THE USER ON A RESET CONTROL ON THE COVER RECONFIGURATION PAGE, ADJUST THE POSITION OF THE VIRTUAL CAMERA TO AN INITIAL POSITION, AND ADJUST THE POSTURE OF THE VIRTUAL CAMERA TO AN INITIAL POSTURE — S3306

IN RESPONSE TO A CLOSING OPERATION OF THE COVER RECONFIGURATION PAGE, DETERMINE AN IMAGE OF THE VIRTUAL OBJECT THAT IS ADJUSTED IN THE COVER EDITING AREA AS THE COVER IMAGE OF THE VIRTUAL OBJECT, AND SAVING THE COVER IMAGE OF THE VIRTUAL OBJECT — S3307

**FIG. 3D**

PROMPT
INFORMATION

**FIG. 3E**

**FIG. 3F**

4200

PROCESSOR 421

MEMORY 423

TRANSCEIVER 422

**FIG. 4**

## INTERNATIONAL SEARCH REPORT

| International application No. |
| --- |
| **PCT/CN2023/136915** |

### A. CLASSIFICATION OF SUBJECT MATTER

G06T 19/00(2011.01)i

According to International Patent Classification (IPC) or to both national classification and IPC

### B. FIELDS SEARCHED

Minimum documentation searched (classification system followed by classification symbols)

IPC: G06T,G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 虚拟对象, 封面, 摄像机, 照相机, 拍摄, 距离, 尺寸, 参数, 调整, 重设, 编辑, 编码, 序列化, virtual object, cover, camera, capture, distance, size, parameter, adjustment, reset, editing, encoding, serialization

### C. DOCUMENTS CONSIDERED TO BE RELEVANT

| Category* | Citation of document, with indication, where appropriate, of the relevant passages | Relevant to claim No. |
| --- | --- | --- |
| Y | CN 112121423 A (SUZHOU HUANTA NETWORK TECHNOLOGY CO., LTD.) 25 December 2020 (2020-12-25)<br>description, paragraphs 0008-0064 | 1-16 |
| Y | CN 113747239 A (BEIJING KUAILAI CULTURE COMMUNICATION GROUP CO., LTD.) 03 December 2021 (2021-12-03)<br>description, paragraph 0090 | 1-16 |
| A | CN 112562051 A (TENCENT TECHNOLOGY (SHENZHEN) CO., LTD.) 26 March 2021 (2021-03-26)<br>entire document | 1-64 |
| A | CN 114510185 A (HANGZHOU NETEASE CLOUD MUSIC TECHNOLOGY CO., LTD.) 17 May 2022 (2022-05-17)<br>entire document | 1-64 |
| A | US 2013042296 A1 (HASTINGS, Ryan L. et al.) 14 February 2013 (2013-02-14)<br>entire document | 1-64 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 February 2024** | **20 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/136915** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2021165484 A1 (SONY CORP.) 03 June 2021 (2021-06-03)<br>        entire document | 1-64 |

Form PCT/ISA/210 (second sheet) (July 2022)

| INTERNATIONAL SEARCH REPORT | | | | | International application No. |
|---|---|---|---|---|---|
| Information on patent family members | | | | | **PCT/CN2023/136915** |

| Patent document cited in search report | | | Publication date (day/month/year) | Patent family member(s) | | | Publication date (day/month/year) |
|---|---|---|---|---|---|---|---|
| CN | 112121423 | A | 25 December 2020 | WO | 2022063177 | A1 | 31 March 2022 |
| CN | 113747239 | A | 03 December 2021 | None | | | |
| CN | 112562051 | A | 26 March 2021 | None | | | |
| CN | 114510185 | A | 17 May 2022 | None | | | |
| US | 2013042296 | A1 | 14 February 2013 | US | 9038127 | B2 | 19 May 2015 |
| | | | | AU | 2011205223 | B1 | 13 September 2012 |
| | | | | AU | 2011205223 | C1 | 28 March 2013 |
| | | | | US | 2015254793 | A1 | 10 September 2015 |
| | | | | US | 9767524 | B2 | 19 September 2017 |
| US | 2021165484 | A1 | 03 June 2021 | WO | 2020039933 | A1 | 27 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310065723
- CN 202310084098

- CN 202310260970